# EUROPÄISCHE PATENTSCHRIFT

(11) **EP 2 739 438 B1**
(45) Veröffentlichungstag und Bekanntmachung des Hinweises auf die Patenterteilung: **09.09.2015**
(21) Anmeldenummer: 12738405.5
(22) Anmeldetag: 17.07.2012
(51) Int. Cl.: B25B 13/46, B25B 23/00, B25B 23/10, B25B 23/142, A61C 8/00, F16D 41/069

(54) **RATSCHE UND VERFAHREN ZUM ÜBERTRAGEN EINES DREHMOMENTS AUF EIN GEGENSTÜCK, SOWIE VERWENDUNG EINER DERARTIGEN RATSCHE IM MEDIZINBEREICH**
RATCHET AND METHOD FOR TRANSMITTING A TORQUE TO A MATING PIECE, AND USE OF SUCH A RATCHET IN THE MEDICAL FIELD
DISPOSITIF À CLIQUET ET PROCÉDÉ PERMETTANT LA TRANSMISSION D'UN COUPLE SUR UNE PIÈCE COMPLÉMENTAIRE, ET UTILISATION DUDIT DISPOSITIF À CLIQUET DANS LE DOMAINE MÉDICAL

(30) Priorität: 05.08.2011 DE 102011052442
(43) Veröffentlichungstag der Anmeldung: 11.06.2014
(73) Patentinhaber: Hipp Medical AG, 78600 Kolbingen (DE)
(72) Erfinder: WAIZENEGGER, Markus, 78600 Kolbingen (DE)
(74) Vertreter: Kuhnen & Wacker
(86) Internationale Anmeldenummer: PCT/EP2012/003037
(87) Internationale Veröffentlichungsnummer: WO 2013/020638

(56) Entgegenhaltungen:
- DE-A1- 3 601 720
- DE-A1- 4 416 631
- DE-A1- 10 305 175
- DE-A1-102005 039 014
- DE-U1-202004 014 195
- US-A- 1 787 185
- US-A- 3 946 843
- US-A- 4 748 874
- US-A- 5 279 189
- US-A1- 2009 192 517

## Beschreibung

Die Erfindung betrifft eine Ratsche nach dem Oberbegriff des Anspruchs 1. Die Erfindung betrifft nach Anspruch 19 ferner die Verwendung einer derartigen Ratsche im Medizinbereich sowie nach Anspruch 20 ein Verfahren zum Übertragen eines aufzubringenden Drehmoments mit einer derartigen Ratsche auf ein Gegenstück.

Bei chirurgischen Eingriffen unter Verwendung von Werkzeugen und/oder medizinischen Geräten ist das Problem einer ausreichenden Sterilisation bekannt. Um zu vermeiden, dass Blut- oder Geweberückstände sowie sonstige Wundausscheidungen in Schlitze oder Verbindungsstellen von korrelierenden Bauteilen gelangen und sich dort ablagern können, wird im medizinischen Bereich Wert darauf gelegt, dass die zur Anwendung kommenden Werkzeuge aus möglichst wenig Einzelteilen bestehen.

Durch die Ausbildung der Werkzeuge aus möglichst wenig Teilen, insbesondere einteilig, ist es möglich, Infektionen, die durch Ablagerungen oder Keime hervorgerufen werden können, die sich an den Verbindungsstellen von mehrteilig ausgestalteten Werkzeugen befinden, weitestgehend zu reduzieren.

Ferner Bedarf es für eine notwendige Sterilisation einteiliger, medizinischer Werkzeuge keiner Demontage einzelner Bestandteile, bei denen es zu möglichen Abnutzungen und Verschleißerscheinungen an den direkten Kontaktstellen kommen kann.

Werkzeuge, die aus wenigen Einzelteilen bestehen oder gar einteilig ausgebildet sind, zeigen ferner den Vorteil, dass eine fehlerhafte Zusammensetzung durch den Benutzer reduziert oder vermieden werden kann, insbesondere auch dann, wenn mehrere baugleiche Werkzeuge in einem Behältnis gereinigt werden.

Zudem kann der Arbeitsaufwand, welcher entsteht, wenn die einzelnen Bauteile mehrteiliger Werkzeuge zusammengefügt werden und im Anschluss daran die Funktionsfähigkeit des zusammengebauten Werkzeugs überprüft wird, verringert werden.

Während in vielen medizinischen Bereichen daher vorzugsweise Werkzeuge zum Einsatz kommen, die aus sehr wenigen, oftmals nur einem einzigen Teil bestehen, beispielsweise einstückig ausgebildete Zangen, Sägen, Bohrer und dergleichen, ist es im Bereich der Mund-, Kiefer- und Gesichtschirurgie nach wie vor der Fall, dass einige Spezialwerkzeuge mehrteilig ausgebildet sein müssen, um die gewünschte Funktion erfüllen zu können.

Dies ist vor allem im Bereich der Dental- und Implantationsbehandlung von besonderer Bedeutung, da beim Einsetzen von Implantatträgern oder Zahnsockeln in den Kiefer besonders darauf geachtet werden muss, keine Infektionserreger zu übertragen, die dann nicht nur das Zahnfleisch sondern unter Umständen sogar den Kieferknochen angreifen könnten. Derartige Implantatträger oder Zahnsockel werden dabei üblicherweise mittels mehrteilig ausgebildeter Dentalratschen in den Kieferknochen eingeschraubt.

Zur Vermeidung der vorgenannten Nachteile, insbesondere des mit der mehrteiligen Ausbildung von medizinischen Werkzeugen verbundenen Infektionsrisikos, sollen jedoch auch im Bereich der Mund-, Kiefer- und Gesichtschirurgie möglichst aus einem Teil gefertigte Werkzeuge, d.h. einteilig ausgebildete Dentalratschen, zum Einsatz kommen.

Hierzu schlägt beispielsweise die DE 20 2007 015 689 U1 eine Dentalratsche vor, bei der ein so bezeichneter Mono-Ratschenkopf am Griffstück angeordnet ist. Der Mono-Ratschenkopf sieht dabei die Umfassung für das Eindrehwerkzeug als Federelement mit Klinkenelement vor. Das Klinkenelement lässt das Bewegen des Eindrehwerkzeugs in nur eine Richtung zu. Die andere Drehrichtung wird durch Einrasten des Eindrehwerkzeugs in das Klinkenelement erreicht.

Ein weiterer wesentlicher Bestandteil der Dentalratsche der DE 20 2007 015 689 U1 ist die nutenförmige Konturausbildung des Eindrehwerkzeugs, wie sie z.B. auch bei einem Torx vorkommt. Nur mit dieser Ausgestaltung ist es mit der Ratsche der DE 20 2007 015 689 U1 möglich, die gewünschte Funktionsweise sicherzustellen.

Im Lauf der Zeit treten bei dem aus der DE 20 2007 015 689 U1 bekannten Klinkenelement jedoch Verschleißerscheinung, insbesondere an der Spitze, auf. Eine kontinuierliche Rastfunktion kann demzufolge bei fortlaufender Anwendung der Ratsche nicht in dem Maße sichergestellt werden, dass eine dauerhaft zuverlässige Einschraubbarkeit von Zahn- oder Kieferimplantaten möglich ist.

Ein weiterer Nachteil ist in dem asymmetrischen, punktuellen Einrasten des Klinkenelements in die Nuten des Eindrehwerkzeugs zu sehen. Demnach kann es zu unerwünschten Maximalspannungen und Scherungen im Bauteil kommen. Zudem bedingt die Konstruktion der Ratsche der DE 20 2007 015 689 U1 eine fest vorgegebene Geometrie für das Eindrehwerkzeug, die eine einfache Ausgestaltung in Form einer kreisförmigen oder zylindrischen Kontur nicht zulässt.

Aus der WO 2006/029542 A1 ist ein Drehmomentschlüssel für den Medizinbereich bekannt, welcher als Ratscheninstrument konzipiert ist. An der Peripherie der Aufnahmeöffnung ist ein begrenzt bewegliches Klinkensegment angeordnet, dessen Frontpartie zur Aufnahmeöffnung weist. Über einen auslenkbaren, linear-elastischen Biegeast wird bei Betätigung des Drehmomentschlüssels in Vorwärtsrichtung das zu generierende Drehmoment mittels einer vom Benutzer ausgeübten Vorwärtskraft eingebracht.

Vom Klinkensegment erstreckt sich eine Klinkenfeder in einen Halsbereich hinein. Das Klinkensegment und die Klinkenfeder bilden dabei eine aus mehreren Teilen zusammengesetzte Klinke, die alternativ auch einteilig ausgebildet werden kann. Das Klinkensegment und die Klinkenfeder sind in einem kanalförmigen Spielraum angeordnet, welcher die Auslenkung beider in der Ebene gegen die Kraft der Klinkenfeder erlaubt.

Die Klinke ist einstückig aus dem Halsbereich herausgeformt oder als separates Bauteil daran befestigt. Allerdings erfolgt das Einrasten des Klinkensegments in das Eindrehinstrument lediglich punktuell, was zu unerwünschten Maximalspannungen und Scherungen führt. Somit kann ein erhöhter Verschleiß des Drehmomentschlüssels an den Kontaktstellen zwischen Eindrehinstrument und Klinkensegment festgestellt werden. Nachteilig ist auch die nutenförmige Ausbildung des Eindrehinstruments im Kontaktbereich mit dem Klinkensegment, da sich dort Rückstände ablagern können.

Aus der US 2009/0192517 A1 ist ein Werkzeug zum Eindrehen von, zum Beispiel, Schrauben in Knochen bei Operationen mit einem entsprechend eingestellten Drehmoment entnehmbar, das eine koaxial zur Längsachse ausgebildete Drehachse besitzt.

Aus der DE 20 2004 014 195 U1 ist schließlich ein Drehmomentschlüssel bekannt, welcher als Ratscheninstrument zur Anwendung in der Medizinaltechnik, insbesondere in der Dentalprothetik, ausgebildet ist. Der Drehmomentschlüssel hat einen zuvorderst liegenden Kopfbereich, einen daran anschließenden Halsbereich, dem ein Schaftbereich folgt, und einen zuhinterst angeordneten Griffbereich, welche sich in der Ebene erstrecken. Im Kopfbereich ist eine Aufnahmeöffnung vorgesehen, die: von einer Umfassung umgeben ist; einen Mittelpunkt besitzt, durch den sich eine Achse zumindest im Prinzip senkrecht erstreckt; und zum Einsetzen eines herkömmlichen Eindrehinstruments in der Erstreckung der Achse dient.

Aufgrund der Ausgestaltung und dem Aufbau der vorstehend beschriebenen Dentalratschen ist es überdies nicht möglich, ein Drehmoment auf ein kreisförmiges oder zylindrisches, und somit im Wesentlichen glattes Gegenstück zu übertragen. Die Drehmomentübertragung ist lediglich bei profilierten Gegenstücken, wie z.B. Torx, Inbus, polygonförmigen Elementen oder dergleichen möglich.

Dementsprechend ist es Aufgabe der vorliegenden Erfindung eine Ratsche zu schaffen, mit der das aufzubringende Drehmoment gleichmäßig auf einem Gegenstück aufbringbar ist.

Gemäß einem weiteren Aspekt soll die Ratsche einen geringen Verschleiß zeigen und das Anlagern von Blut- oder Geweberückständen, und die daraus resultierende Infektionsgefahr durch Bakterienbildung, weitestgehend verhindern. Schließlich soll die Ratsche gemäß einem weiteren Aspekt auch einfach und ohne großen Aufwand von weniger erfahrenem Personal, beispielsweise Auszubildenden beim Zahnarzt, die mit der Desinfektion der verwendeten Werkzeuge und der Vorbereitung des Behandlungsraumes vertraut gemacht werden, handhabbar sein.

Diese Aufgabe und Aspekte werden durch die Merkmale des Anspruchs 1 und der nebengeordneten Ansprüche gelöst.

Erfindungsgemäß wird dabei eine Ratsche vorgeschlagen, die ein Griffstück mit einer Längsachse und ein an einem Abschnitt des Griffstücks angeordnetes Drehpunktgehäuse aufweist. Das Drehpunktgehäuse weist ferner eine relativ zur Längsachse des Griffstücks ausgerichtete Drehachse und eine Umlauffläche auf Darüber hinaus weist die Ratsche wenigstens ein polygonförmig ausgebildetes Klemmelement auf, das eine erste, eine Klemmfläche bildende, Stirnfläche, und eine zweite, der ersten Stirnfläche gegenüberliegende, Stirnfläche aufweist, und wenigstens einen stegförmigen Abschnitt mit einem der Umlauffläche zugewandten Ende und einem dem Klemmelement zugewandten Ende hat. Dabei ist der stegförmige Abschnitt derart zwischen der Umlauffläche und dem Klemmelement angeordnet, dass das der Umlauffläche zugewandte Ende des stegförmigen Abschnitts mit der Umlauffläche des Drehpunktgehäuses verbunden ist, und dass das dem Klemmelement zugewandte Ende des stegförmigen Abschnitts mit der zweiten Stirnfläche des Klemmelements verbunden ist.

Der Kraftfluss der erfindungsgemäßen Ratsche verläuft von dem Griffstück zum Drehpunktgehäuse über den stegförmigen Abschnitt auf das Klemmelement, bei dem die Klemmfläche die Kraft bzw. das Moment auf die Oberfläche des Gegenstücks überträgt und somit eine wirksame Momentenübertragung von der Ratsche auf das Gegenstück sicherstellt.

Mittels dieser Ratsche ist es dabei erstmals möglich, auch auf ein kreisförmig oder zylindrisch ausgebildetes, insbesondere glattes, Gegenstück, das keine weitere Kontur oder Oberflächengestaltung aufweist, ein Drehmoment zu übertragen, in dem die am Klemmelement ausgebildete Klemmfläche kraftschlüssig auf die Oberfläche des Gegenstücks drückt. Die Kraftverteilung über die Klemmfläche kann dabei z.B. punktuell, vollflächig oder streifenförmig sein. Dadurch wird vermittels einer zwischen der Klemmfläche des Klemmelements und der Oberfläche des Gegenstücks auftretenden äußeren Haftreibung das Gegenstück schlupffrei fixiert und wirksam ein Drehmoment in eine Drehmomentübertragungsrichtung übertragen. Die Verwendung eigens hergestellter, konturtragender Gegenstücke, beispielsweise entsprechender Implantatträger und dergleichen, ist somit nicht mehr nötig.

Obschon an dem Drehpunktgehäuse ein Griffstück angeordnet ist, kann das Drehpunktgehäuse durchaus auch ohne ein solches für etwaige schwer zugängliche Stellen ausgebildet werden.

Die Herstellung der erfindungsgemäßen Ratsche kann durch eine einfache Ausgestaltung wirtschaftlich durchgeführt werden, was kostendämpfend wirkt und das Gesundheitssystem monetär entlastet.

Neben dem vorgenannten zylindrischen oder kreisförmigen Gegenstück, kann das Drehmoment auch auf weitere, derzeit üblicherweise verwendete Gegenstücke, welche z.B. im Querschnitt als Torx, Inbus, polygonförmiges Element oder dergleichen ausgebildet sind, übertragen werden.

Dadurch, dass das Klemmelement beliebige Formen aufweisen kann, kann die Klemmwirkung zwischen Klemmfläche und Oberfläche des Gegenstücks besonders gut ausgebildet werden. Darunter können Formen, wie z.B. rechteckig, quadratisch, trichterförmige, keilförmig, trapezförmig, fächerförmig, etc., zur Anwendung kommen. Als weiterer Vorteil ist darin die Aufnahme von beliebigen Gegenstücken zu sehen, wie z.B. Torx, Inbus, polygonförmigen Elementen oder dergleichen.

Bei einer polygonförmigen Ausbildung des Klemmelements kann sich die gedachte Mittellinie nicht nur auf das Klemmelement beziehen, sondern auch auf die Klemmfläche.

Weitere Ausgestaltungen der erfindungsgemäßen Ratsche sind Gegenstand der Unteransprüche.

So kann bei der erfindungsgemäßen Ratsche der stegförmige Abschnitt senkrecht zur Drehachse biegsam ausgebildet sein.

Vermittels dieser senkrecht zur Drehachse biegsamen Ausgestaltung des stegförmigen Abschnitts kann wirksam der Durchmesser der Ratsche ein- bzw. verstellt werden. Ein Nullkreis definiert sich zum einen durch die Drehachse des Drehgehäuses, welche einen Mittelpunkt des Nullkreises festlegt. Zum anderen definiert sich der Nullkreis durch den Durchmesser, der die kürzeste Entfernung vom Mittelpunkt bzw. von der Drehachse zu einem Punkt auf der Klemmfläche des nicht geschwenkten Klemmelements misst. Für einen ordnungsgemäßen Gebrauch eines Gegenstücks muss das Gegenstück einen größeren Durchmesser aufweisen als der Nullkreis. Demzufolge muss bei der Aufnahme des Gegenstücks das Klemmelement seine wirkende Länge verändern. Bei Drehen der Ratsche in Freilaufrichtung verändert das Klemmelement durch Schwenken eine erste wirkende Länge zu einer zweiten wirkenden Länge. Hierbei entsteht ein Aufnahmekreis bzw. Freilaufkreis, mit einem Mittelpunkt auf der Drehachse und einem größeren Durchmesser als der Nullkreis. Bei Drehung der Ratsche in Drehmomentübertragungsrichtung werden die Klemmelement und/oder stegförmige Abschnitte in die entgegengesetzte Richtung gebogen, wobei ein Klemmkreis entsteht, der einen Durchmesser aufweist, der zwischen dem des Nullkreises und dem des Freilaufkreis liegt. Das Klemmelement verändert seine wirkende Länge zu einer dritten wirkenden Länge. So kann durch die Klemmwirkung der anliegenden Klemmelemente eine Haftreibung wirksam erzielt werden, so dass die Drehmomentübertragung erfolgen kann.

Die Durchmessergröße des Gegenstücks bestimmt sich z.B. durch die Parameter Biegesteifigkeit des stegförmigen Abschnitts, Kontur der Klemmfläche, Positionierung des stegförmigen Abschnitts sowie deren Interaktion, wobei weitere Einstellparameter denkbar sind. Zudem bestimmt sich der Durchmesser des Gegenstücks aus der vorgesehenen Anwendung, beispielsweise als Implantatträger, als Sockel für einen Stiftzahn, als Fixierungselement bei einem Knochenbruch oder dergleichen.

Durch die senkrecht zur Drehachse biegsame Ausbildung des stegförmigen Abschnitts ist es möglich, das Klemmelement und somit die Klemmfläche derart in Richtung der Umlauffläche zu kippen bzw. zu schwenken, dass ein Gegenstück aufgenommen werden kann, da der Nullkreis durch die Biegung des stegförmigen Abschnitts einen noch größeren Durchmesser aufweist. Die Richtung, in die sich das Klemmelement bzw. der stegförmige Abschnitt dabei biegt, ist als Freilaufrichtung definiert. Vorteilhaft, allerdings nicht zwingend, kann das zylindrische Gegenstück eine abgefaste Kante an dessen Stirnseite aufweisen, welche einen kleinen Durchmesser als der Nullkreis aufweist, um das Aufbringen der Ratsche auf das Gegenstück zu erleichtern.

Beim Aufbringen der Ratsche wird zunächst ein Schwenken bzw. Biegung der Klemmelemente mit gleichzeitigem Bewegen der Ratsche in axiale Richtung, vorzugsweise beginnend an der abgefasten Kante des Gegenstücks, entlang einer Drehachse des Gegenstücks durchgeführt. Demnach wird der stegförmige Abschnitt zusammen mit dem Klemmelement soweit in Richtung der Umlauffläche gebogen, dass das einen größeren Durchmesser als der Nullkreis aufweisende Gegenstück aufgenommen werden kann. Analog werden bei einer Mehrzahl von Klemmelementen selbige zeitgleich derart "geschwenkt" bzw. "verlagert", dass eine Aufnahme des Gegenstücks erfolgen kann.

Durch die Federeigenschaft des senkrecht zur Drehachse biegsamen, stegförmigen Abschnitts, versucht der stegförmige Abschnitt in dessen Ausgangszustand, den nicht gebogenen Zustand, zurückzukehren. Dabei werden die Klemmflächen der Klemmelemente, wie Bremsbacken, wirksam an die zylindrische Oberfläche des Gegenstücks gedrückt, wodurch eine Haftreibung durch die an das Gegenstück angedrückten Klemmflächen entsteht.

Das Gegenstück wird dabei innerhalb des Drehpunktgehäuses an den auf den Klemmelementen ausgebildeten Klemmflächen fixiert und die Drehmomentübertragung kann vermittels der Ratsche auf das Gegenstück in Drehmomentübertragungsrichtung erfolgen.

Wird die Ratsche in die entgegengesetzte Richtung, also der Freilaufrichtung, gedreht, biegen sich die stegförmigen Abschnitte mit den zugehörigen Klemmelementen in Richtung der Umlauffläche und die Haftreibung an den Kontaktstellen schwindet. So kann ein Freilauf innerhalb der Ratsche erzeugt werden, wodurch die Ratsche beim Drehen in Freilaufrichtung durchdreht und somit einen Schlupf erzeugt. Durch abwechselndes Eingreifen und Lösen der Klemmflächen am Gegenstück durch entsprechendes Drehen der Ratsche in die Drehmomentübertragungsrichtung und die Freilaufrichtung kann das Gegenstück unter Schaffung eines Ratscheneffekts eingeschraubt (oder auch gelöst) werden. Beim Abnehmen der Ratsche vom Gegenstück wird die Ratsche zusätzlich zum Drehen in die Freilaufrichtung in axiale Richtung entlang der Drehachse des Gegenstücks weg bewegt, so dass die Ratsche wieder vom Gegenstück entfernt werden kann.

Die stegförmigen Abschnitte können vorteilhaft auch mit unterschiedlicher Biegesteifigkeit gestaltet sein, so dass z.B. die Hälfte der stegförmigen Abschnitte eine geringe Steifigkeit aufweisen können und sich dadurch eher biegen bzw. schwenken lassen als die stegförmige Abschnitte mit einer härteren Steifigkeit. Die stegförmigen Abschnitte mit einer härteren Steifigkeit biegen sich dagegen erst später.

Nach einem weiteren Aspekt der vorliegenden Erfindung kann die Klemmfläche durch eine Kurve beschrieben werden, vorzugsweise durch einen Radius. Die Kontur der Klemmfläche definiert auf vorteilhafte Weise den Zeitpunkt des Eintretens des Klemmens in Drehmomentübertragungsrichtung bzw. Lösen des Klemmens in Freilaufrichtung. In Betracht kommen unter anderem Kurven sowie Radien wie z.B. logarithmische Spiralen, Sinus/Cosinus-Kurven, Parabeln, zyklische, elliptische oder ovale Kurven, Radien mit unterschiedlichen, ineinanderlaufenden Durchmessern, konstante Radien, etc.

Das Zusammenspiel der jeweiligen Klemmflächen mit der zylindrisch ausgebildeten Oberfläche des Gegenstücks, wie auch die daraus resultierende Klemmwirkung, ist vom Verlauf der Kurve bzw. des Radius der Kontur abhängig. Ist die Klemmfläche relativ flach, einer Geraden ähnlich, ausgebildet, erfolgt die Klemmwirkung sanft. Dagegen wird z.B. bei einer steilen Ausbildung der Klemmfläche, wie z.B. einer negativen Parabel, die Klemmwirkung rasch einsetzen. Ferner können die einzelnen Klemmflächen aus der Mehrzahl der Klemmelemente mit unterschiedlichen Kuren bzw. Radien ausgestaltet werden, dass die Klemmwirkung der einzelnen Klemmelemente gezielt einstellbar sind.

Bei einer Ausführungsform der vorliegenden Erfindung kann die Ratsche nicht nur ein Klemmelement aufweisen. Vielmehr kann die Ratsche vorteilhaft eine Mehrzahl von Klemmelementen mit stegförmigen Abschnitten aufweisen. Diese werden jeweils mit dem der Umlauffläche zugewandten Ende des stegförmigen Abschnitts an der Innenwand der Umlauffläche und mit dem Klemmelement zugewandten Ende des stegförmigen Abschnitts an der zweiten Stirnfläche des Klemmelements angeordnet. Demzufolge kann die Haftreibung zwischen der Klemmfläche und der Umfangsoberfläche des Gegenstücks wirksam auf mehrere Kontaktstellen verteilt werden. Hieraus ergibt sich eine homogene radiale sowie mit periodischen Abständen gleichverteilte Kraftverteilung im Gegenstück. Maximalspannungen und auftretende Scherkräfte innerhalb des Gegenstücks können somit auf einfache Weise konstruktiv vermieden werden, was insbesondere zu einem geringeren Verschleiß des Gegenstücks führt.

Die Mehrzahl der Klemmelemente ist jeweils über den stegförmigen Abschnitt mit der Umlauffläche des Drehpunktgehäuses verbunden. Eine Verbindung zwischen den einzelnen benachbarten Klemmelementen, z.B. in Form eines Käfigs, ist somit nicht notwendig, wobei eine erhöhte Flexibilität der einzelnen Klemmelemente gegeben ist. Materialeinsparungen sowie eine mehrstückige Ausbildung der Ratsche sind hierbei als Vorteil anzusehen.

Die wirkungsvolle Verteilung des aufzubringenden Drehmoments auf mehrere Klemmelemente entlastet zudem nicht nur das Gegenstück, auch die entsprechenden Klemmelemente mit den dazugehörigen stegförmigen Abschnitten werden entlastet.

Gemäß einem weiteren Aspekt der vorliegenden Erfindung können die Klemmelemente symmetrisch zueinander angeordnet werden. Die symmetrische Anordnung bezieht sich im Wesentlichen auf eine Punktsymmetrie, bei der die Drehachse das Symmetriezentrum darstellt. Darüber hinaus können auch Achsensymmetrie, Rotationssymmetrie oder dergleichen zur Anwendung kommen. Die Klemmelemente können dabei ferner - oder alternativ - einen periodischen Abstand zueinander entlang der Umlauffläche aufweisen.

Die Ausgestaltung der Klemmelemente in periodischem Abstand zueinander ermöglicht auf vorteilhafte Weise, dass sich die in den Klemmelementen ausgebildeten Klemmflächen entsprechend einem vordefinierten Abstand an die Oberfläche des Gegenstücks anpressen können. Somit kann die benötigte Haftwirkung an verschiedenen, durch die periodischen Abstände zwischen den einzelnen Klemmelementen definierten, Punkten hergestellt werden.

Gemäß einer weiteren Ausführungsform kann die Ratsche einstückig ausgebildet sein.

Durch eine einstückige konstruktive Ausbildung der Ratsche ist es vorteilhaft möglich, die Herstellungskosten der Ratsche erheblich zu minimieren, da sich neben einer Montage auch ein Zusammenbau, wie etwa bei mehrteiligen Ratschen, erübrigt.

Darüber hinaus ermöglicht die einstückige Ausbildung der Ratsche ein deutlich geringeres Risiko von anhaftenden Blut- oder Geweberesten. Auch die nach jeder Anwendung notwendige Sterilisation kann deutlich schneller durchgeführt werden, da die Ratsche nicht mehr zerlegt und anschließend neu zusammengebaut werden muss. Durch das Ermöglichen einer solchen effizienteren Arbeitsweise wird auch das stark beanspruchte Gesundheitssystem entlastet.

Aufgrund der einstückigen Gestaltung der Ratsche kann ferner auf vorteilhafte Weise verhindert werden, dass bei mehreren baugleichen bzw. bauähnlichen Ratschen die Komponenten beim Zusammensetzen verwechselt werden, was unter Umständen zu einer Zerstörung oder einer Beeinträchtigung der Funktionsweise der Ratsche führen kann.

Gerade bei einem wiederholten Zusammensetzen der Ratsche werden zudem die filigranen Verbindungsstellen der Bauteile stark in Anspruch genommen und verschliessen. Mit einer einstückigen Ausbildung wird diesem Problem wirksam Rechnung getragen.

Gemäß einer Ausführungsform der vorliegenden Erfindung kann die Ratsche derart ausgebildet sein, dass der stegförmige Abschnitt in die zweite Stirnfläche des Klemmelements übergeht. Wenn der stegförmige Abschnitt die gleiche Breite wie die zweite Stirnfläche aufweist, laufen die zwei Seitenflächen des stegförmigen Abschnitts stoßfrei in die entsprechenden beiden Seitenflächen der Klemmelemente über.

Hierdurch ist es vorteilhaft möglich, die Fertigung der Ratsche erheblich zu vereinfachen. Zudem ist es durch die, sozusagen integrale, sichelmondartige Ausbildung des stegfömigen Abschnitts in Verbindung mit dem Klemmelement möglich, nicht benötigtes Material einzusparen.

Nach einer weiteren Ausführungsform ist die Ratsche derart gestaltet, dass das dem Klemmelement zugewandte Ende des stegförmigen Abschnitts seitlich beabstandet von einer gedachten Mittellinie des Klemmelements mit der zweiten Stirnfläche verbunden ist. Die Mittellinie des Klemmelements wird in Richtung der Drehachse des Drehpunktgehäuses betrachtet.

Auf vorteilhafte Weise kann durch die nicht mittige Anordnung des stegförmigen Abschnitts die Ratschenwirkung bzw. der Ratscheneffekt wirkungsvoll unterstützt werden, in dem die Freilaufrichtung derart gewählt wird, dass sich der stegförmige Abschnitt zusammen mit dem Klemmelement weiter in Richtung der Umlauffläche biegen kann.

Ein weiterer Aspekt der vorliegenden Erfindung ist, dass die Klemmfläche einen maximalen Entfernungspunkt aufweist, der in Bezug auf die gedachte Mittellinie des Klemmelements diametral der Seite gegenüberliegt, an der die zweite Stirnfläche mit dem Klemmelement zugewandten Ende des stegförmigen Abschnitts verbunden ist. Falls ein kontinuierlicher Übergang zwischen dem stegförmigen Abschnitt und dem Klemmkörper ausgebildet ist, kann der maximale Entfernungspunkt auch dem Verbindungspunkt zwischen dem der Umlauffläche zugewandten Ende des stegförmigen Abschnitts und der Umlauffläche mit Bezug auf die gedachte Mittellinie des Klemmelements diametral gegenüberliegen.

Durch die gezielte Anordnung des maximalen Entfernungspunkts besteht die Möglichkeit die Klemmwirkung - und damit das insgesamt mittels der Ratsche übertragbare Drehmoment - gezielt entlang der Umlauffläche festzulegen. Der Abstand des maximalen Entfernungspunkts zur gedachten Mittellinie des Klemmelements, in Richtung der Drehachse betrachtet, beeinflusst das Biegen des stegförmigen Abschnitts und somit die Klemmwirkung der Klemmelemente. Neben dem maximalen Entfernungspunkt bilden sich zwei gedachte Punkte aus. Diese beiden gedachten Punkte sind vom maximalen Entfernungspunkt seitlich, in Richtung der Drehachse betrachtet, beabstandet und befinden sich zum einen vor und nach dem maximalen Entfernungspunkt entlang der Klemmfläche.

Einer der gedachten Punkte beschreibt einen Klemmpunkt, genauer einen Kraftangriffspunkt, der beim Drehen der Ratsche in Drehmomentübertragungsrichtung die Kontaktstelle zwischen Klemmfläche und der Oberfläche des Gegenstücks bildet, und bei dem die Klemmelemente auf die Oberfläche des Gegenstücks drücken. Hierbei entsteht an der Verbindungsstelle des dem Klemmelement zugewandten Endes des stegförmigen Abschnitts und an der zweiten Stirnfläche ein erster Drehpunkt. Der Drehpunkt kann allerdings ohne weiteres, insbesondere wenn der stegförmige Abschnitt in die zweite Stirnfläche oder die Seitenflächen übergeht, auch zwischen dem der Umlauffläche zugewandten Ende des stegförmigen Abschnitts und der Umlauffläche sein. Ein erster Hebelarm ist dabei ein erster Abstand, der sich senkrecht zur gedachten Mittellinie des Klemmelements von dem Klemmpunkt zu der Verbindung des dem Klemmelement zugewandten Endes des stegförmigen Abschnitts an der Stirnfläche erstreckt. Durch die vom Klemmelement auf die Oberfläche des Gegenstücks aufgebrachte Kraft und mit dem durch den ersten Abstand definierten ersten Hebelarm ergibt sich ein Klemmmoment. Dieses Klemmmoment wird als positives Moment definiert.

Der andere gedachte Punkt beschreibt einen Druckpunkt. Dieser stellt einen weiteren Angriffspunkt dar, bei dem beim Drehen der Ratsche in Freilaufrichtung die Oberfläche des Gegenstücks auf die Klemmfläche drückt, und bei dem die Klemmelemente in die Richtung der Umlauffläche wegdrückt bzw. seitlich, in Richtung der Drehachse betrachtet, weggeschwenkt bzw. -gekippt werden. Hierbei entsteht wiederum an der Verbindungsstelle des dem Klemmelement zugewandten Endes des stegförmigen Abschnitts an der zweiten Stirnfläche ein zweiter Drehpunkt. Ein zweiter Hebelarm ist ein zweiter Abstand, der sich senkrecht zur gedachten Mittellinie des Klemmelements von dem Druckpunkt zu der Verbindung des dem Klemmelement zugewandten Endes des stegförmigen Abschnitts an der Stirnfläche erstreckt. Durch die von der Oberfläche des Gegenstücks auf die Klemmelemente aufgebrachte Kraft und mit dem durch den zweiten Abstand definierten zweiten Hebelarm ergibt sich ein Druckmoment. Das Druckmoment wirkt bezüglich des Klemmmoments in gegensätzliche Richtung und wird als negatives Drehmoment definiert.

Der Drehpunkt kann ohne weiteres, insbesondere wenn der stegförmige Abschnitt in die zweite Stirnfläche oder die Seitenflächen des Klemmelements übergeht, auch zwischen dem der Umlauffläche zugewandten Ende des stegförmigen Abschnitts und der Umlauffläche sein. Es sei noch angemerkt, dass der erste Drehpunkt und der zweite Drehpunkt auf einen einzigen Drehpunkt zusammenfallen können.

Je größer die Abstände von dem Klemmpunkt bzw. Druckpunkt zu dem stegförmigen Abschnitt sind, der z.B. mit seinem dem Klemmelement zugewandten Ende mittig an der zweiten Stirnfläche, also genau entlang der gedachten Mittellinie des Klemmelements in Drehachsenrichtung betrachtet, ausgebildet ist, desto größer sind die entsprechenden Klemmmomente bzw. Druckmomente. Ist dagegen der Klemmpunkt bzw. Druckpunkt, bei gleichbleibender Anordnung des stegförmigen Abschnitts, nahe an der gedachten Mittellinie des Klemmelements, werden Klemmmoment bzw. Druckmoment kleiner.

Somit kann auf vorteilhafte Weise der maximale Entfernungspunkt der Klemmfläche nach Bedarf gewählt und eingestellt werden. Ferner kann es von Vorteil sein, dass für jedes einzelne Klemmelement aus der Mehrzahl der Klemmelemente der maximale Entfernungspunkt individuelle entlang der Klemmfläche verlaufend festgelegt werden kann. Hierdurch kann die Klemmwirkung der Ratsche individuell eingestellt werden.

Gerade durch das Zusammenspiel des maximalen Entfernungspunkts auf der Klemmfläche mit der Anordnung des dem Klemmelement zugewandten Endes des stegförmigen Abschnitts auf der zweiten Stirnfläche kann erreicht werden, dass die Ratschenwirkung, also der Schlupf bei Drehung in Freilaufrichtung, und die Klemmwirkung der einzelnen Klemmelemente auf das zylindrische Gegenstück in Drehmomentübertragungsrichtung optimiert wird. Dabei spielt der erste und zweite Abstand für das Klemmmoment und das Druckmoment eine wichtige Rolle. Wird der stegförmige Abschnitt diametral gegenüberliegend bezüglich des maximalen Entfernungspunkts gestaltet, können die Abstände wesentlich vergrößert werden. Demnach lassen sich die entsprechenden Klemmmomente und Druckmomente auf einfache Weise konstruktiv vergrößern.

Obgleich vorstehend vom Entfernungspunkt ausgegangen wurde, kann durch eine entsprechende Ausbildung des Klemmelements auch der maximale Entfernungspunkt als Fläche ausgebildet werden. Wenn der maximale Entfernungspunkt oder -fläche nicht durch die zweite Stirnfläche sachgemäß definiert werden kann, möglicherweise durch eine Wellenstruktur der zweiten Stirnfläche, weist der auf der Klemmfläche befindliche maximale Entfernungspunkt des Klemmelements den kürzesten Abstand zu der Drehachse auf. Die maximale Entfernungsfläche erstreckt sich dementsprechend tangential zum maximalen Entfernungspunkt.

Gemäß einem weiteren Aspekt der vorliegenden Erfindung kann der stegförmige Abschnitt derart ausgebildet werden, dass der stegförmige Abschnitt, in Richtung der Drehachse betrachtet, in einem Winkel relativ zur Umlauffläche und/oder zur zweiten Stirnfläche angeordnet ist.

Dadurch wird auf vorteilhafte Weise die Biegesteifigkeit des stegförmigen Abschnitts in Verbindung mit dem Klemmkörper gezielt eingestellt. So kann der Freilauf und die Klemmwirkung des Klemmelements gegenüber der zylindrisch ausgebildeten Oberfläche des Gegenstücks bei der Ausbildung eines dem maximalen Entfernungspunkt zugewandten spitzen Winkel zwischen der Umlauffläche und des der Umlauffläche zugewandten Endes des stegförmigen Abschnitts und eines dem maximalen Entfernungspunkt abgewandten stumpfen Winkels zwischen dem Klemmelement zugewandten Ende des stegförmigen Abschnitts und der zweiten Stirnfläche noch wirksam unterstützt werden. Darüber hinaus ist es auch denkbar, einen dem maximalen Entfernungspunkt zugewandten Winkel zwischen der Umlauffläche und des der Umlauffläche zugewandten Endes des stegförmigen Abschnitts stumpf auszubilden.

Ferner kann der stegförmigen Abschnitt derart gestaltet werden, dass er im Wesentlichen senkrecht zur Umlauffläche und/oder zur zweiten Stirnfläche ist. Dadurch ergeben sich aus fertigungstechnischer Sicht Vorteile, da an den Verbindungsstellen, in Richtung der Drehachse betrachtet, keine spitzen Winkel zwischen dem der Umlauffläche zugewandten Ende des stegförmigen Abschnitts und der Umlauffläche sowie zwischen dem Klemmelement zugewandten Ende des stegförmigen Abschnitts und der zweiten Stirnfläche des Klemmelements entstehen.

Gemäß einem weiteren Aspekt der vorliegenden Erfindung kann die erfindungsgemäße Ratsche derart ausgestaltet sein, dass wenigstens zwei stegförmige Abschnitte ein Klemmelement mit der Umlauffläche verbinden.

Hierdurch kann auf vorteilhafte Weise das Klemmelement an zwei unterschiedlichen Punkten durch den stegförmigen Abschnitt aufgenommen werden, was zu einer verbesserten bidirektionalen Kraftübertragung führt. Die stegförmigen Abschnitte können dabei nebeneinander entlang der Dicke der Umlauffläche mit den der Umlauffläche zugewandten Enden der jeweiligen stegförmigen Abschnitte an der Umlauffläche und mit den dem Klemmelement zugewandten Enden der jeweiligen stegförmigen Abschnitte an der zweiten Stirnfläche angeordnet sein. Neben einem oder zwei an der zweiten Stirnfläche angeordneten, stegförmigen Abschnitte, können noch weitere stegförmige Abschnitte an den Seitenflächen der Klemmelemente angeordnet werden.

Diese stegförmigen Abschnitte werden dann jeweils mit dem der Umlauffläche zugewandten Ende des stegförmigen Abschnitts an die Umlauffläche angeordnet und mit dem Klemmelement zugewandten Ende des stegförmigen Abschnitts zu unterschiedlichen oder gleichen Seitenflächen angeordnet. Es ist hierbei nicht zwingend erforderlich, dass die zwischen zweiten Stirnfläche und Umlauffläche angeordneten, stegförmigen Abschnitte vorhanden sind. Die beiden an den zwei Seitenflächen, wie auch die beiden an der zweiten Stirnfläche, angeordneten stegförmige Abschnitte können als Federelemente, wie z.B. mäanderförmig, spiralenförmig, blattfederartig, konisch, etc., ausgebildet werden.

Gemäß einem weiteren Aspekt der vorliegenden Erfindung kann das Drehpunktgehäuse mit einer unterbrochenen Kontur bzw. Rand ausgebildet sein. Dadurch wird auf vorteilhafte Weise das Aufbringen der Ratsche auf das Gegenstück erheblich erleichtert.

Nach einer weiteren Ausführungsform des erfindungsgemäßen Gegenstandes kann das Drehpunktgehäuse senkrecht zur Drehachse biegsam ausgebildet sein. So kann das Drehpunktgehäuse vorteilhaft flexible ausgestaltet werden, was wiederum das Aufbringen der Ratsche auf das Gegenstück erleichtert. Dabei ist es, um die Funktionsweise der Ratsche zu gewährleisten, nötig, dass das Drehpunktgehäuse eine ausreichende Stabilität aufweist.

Bei einer Ausführungsform der erfindungsgemäßen Ratsche kann diese wenigstens ein zweites Griffstück aufweisen. Hierbei kann z.B. das zweite Griffstück um 180° versetzt an das Drehpunktgehäuse angeordnet werden, so dass bei der Kraftübertragung von den Griffstücken auf das Drehpunktgehäuse selbiges keine punktuelle Krafteinleitung erfährt. Vielmehr können die Griffstücke an mehreren Punkten, vorzugsweise in periodischer Anordnung, positioniert werden, um eine besserer Zentrierung der Krafteinleitung zu bekommen. Ferner kann die Ratsche in einem geeigneten Winkel auf das Gegenstück aufgesetzt werden. Eine schräge Anstellung der Ratsche auf das Gegenstück kann demnach wirksam vermieden werden.

Ein weiterer Aspekt der erfindungsgemäßen Ratsche ist, dass das Griffstück, das Drehpunktgehäuse, der stegförmige Abschnitt und das Klemmelement die gleiche Dicke aufweisen. Durch diese vorteilhafte Ausgestaltung kann die Ratsche aus einer konstanten Materialdicke hergestellt werden, was die Herstellungskosten sinken lässt und den Fertigungsprozess wesentlich vereinfacht.

Bei einer Ausführungsform der erfindungsgemäßen Ratsche kann bei dem Bereich des Griffstücks und/oder des Drehpunktgehäuses eine Markierung vorgesehen werden. Vorteilhaft ist die Markierung besonders für den Benutzer, wenn er an sensiblen Stellen arbeitet, wie z.B. am Gewebe, an Wunden, im Mundbereich, etc., da er durch der Markierung hingewiesen wird in welche Richtung die Ratsche gedreht werden muss, um das Gegenstück anzuziehen oder wieder zu lösen. Demnach kann wirksam ein unnötiges "Ausprobieren" der Drehrichtung durch die Ratsche an sensiblen Stellen verhindert werden.

Gemäß einem weiteren Aspekt der vorliegenden Erfindung kann das Griffstück im Querschnitt zylindrisch ausgebildet sein, wodurch dem Benutzer eine ergonomische Handhabung ermöglicht wird.

Bei der erfindungsgemäßen Ratsche kann als weiterer Aspekt das Griffstück eine Aufnahme aufweisen. Vorteilhaft wird demnach eine Aufnahmestelle für das Griffstück geschaffen. Mit einer solchen Aufnahme kann bei schwer zugänglichen Stellen neben einer geraden länglichen Verlängerung auch ein Winkelstück aufgenommen werden.

Nach einem weiteren Aspekt der erfindungsgemäßen Ratsche weist selbige einen Anschlag auf. Der Anschlag ragt wenigstens zum Teil in den Bereich des Nullkeises und ist auf der nicht zum Gegenstück zugewandten Seite angeordnet, so dass die Ratsche beim Aufbringen auf das Gegenstück lediglich bis zum Anschlag auf das Gegenstück aufgebracht werden kann. Bei dem Aufbringen der Ratsche auf das Gegenstück wird demnach wirksam verhindert, dass die Ratsche in axiale Richtung des Gegenstück in das Gewebe oder die offene Wunden gleitet, wodurch der Patient möglicherweise verletzt werden könnte.

Gemäß einem weiteren Aspekt des vorliegenden Erfindung ist die Drehachse des Drehgehäuses und die Längsachse des Griffstücks voneinander beabstandet. Das Drehpunktgehäuse kann somit zu dem Griffstück als Winkel ausgebildet werden. Mit dieser vorteilhaften Gestaltung der Ratsche kann der Benutzer vermittels der Beabstandung der Drehachse zu der Längsachse an schwer zugänglichen Stellen, insbesondere im Bereich der Backzähne, arbeiten.

Ein weiterer Aspekt der vorliegenden Erfindung besteht darin, dass sich die Drehachse des Drehgehäuses und die Längsachse des Griffstücks schneiden. Vermittels dieser Anordnung der Achsen zueinander kann die Zug- und Schubkraft wirksam auf das Gegenstück gebracht werden.

Ein anderer Aspekt der vorliegenden Erfindung ist die Anordnung der Drehachse des Drehpunktgehäuses zur Längsachse des Griffstücks. Die Drehachse des Drehgehäuses und die Längsachse des Griffstücks können sich in einem Winkel von 30 ° bis 150 °, vorzugsweise von 60 ° bis 120 °, besonders bevorzugt von 90 °, relativ zur Längsachse schneiden. Vorteile bringt diese Ausgestaltung beim Aufbringen der Ratsche auf das Gegenstück, insbesondere bei schwer zugänglichen Bereichen. Ohne Weiteres kann hierbei ein feststellbares Gelenk zwischen dem Drehpunktgehäuse und dem Griffstück angeordnet werden, dass eine kontinuierliche Einstellung des Winkels, je nach Bedarf, ermöglicht.

Bei der erfindungsgemäßen Ratsche kann als weiterer Aspekt die Ratsche aus Edelstahl, Titan, Keramik, verschleißfesten Kunststoffen oder dergleichen ausgebildet sein. Angesichts einer langen Lebensdauer der Ratsche wird verstärkt Wert auf die Verschleißfestigkeit bzw. Widerstandsfestigkeit der Ratsche, insbesondere bei den Klemmflächen gelegt. Ferner kann die Funktionsweise über einen langen Zeitraum gewährleistet werden. Alternativ können auch jede Art von Automaten-, Bau- oder Federstählen verwendet werden, die ein besonderes Beschichtungsverfahren durchgelaufen haben, um gegenüber Korrosion geschützt zu sein.

Ferner kann die Ratsche aus einer Gedächtnislegierung ausgebildet sein. Dadurch, dass Gedächtnislegierungen bei einer vorbestimmten Temperatur ihre Form ändern, kann eine, beispielsweise bei einer unsachgemäßen Verwendung erzeugte, plastische Verformung der Ratsche wieder rückgängig gemacht werden. Dieser Vorgang kann bei medizinischer Anwendung auf einfache Weise durch die Temperatur des Sterilisierungsmittels, mit dem die Ratsche nach und/oder vor dem Gebrauch beispielsweise in einem Sterilisator sterilisiert wird, umgesetzt werden, wodurch gleichzeitig eine Rückverformung der Ratsche in den Ausgangszustand und eine Sterilisation der Ratsche durchgeführt wird. Solch eine Formgedächtnislegierung bzw. Gedächtnislegierung kann vorzugsweise eine Ni-Ti-Legierung sein. Auch weitere Gedächtnislegierungen, wie z.B. Cu-Zn, Cu-Zn-Al, Cu-Al-Ni, Fe-Ni-Al, usw. sind möglich.

Nach einem weiteren Aspekt der vorliegenden Erfindung sind die Klemmelemente wenigstens zum Teil gehärtet ausgebildet. Entscheidend für den geringen Verschleiß der Ratsche ist, dass das die Ratsche, insbesondere die Klemmflächen, wesentlich härter ausgebildet sind als das Gegenstück. Besonders im Bereich der Klemmflächen soll das Gefüge durch eine gezielte Umwandlung die mechanische Widerstandsfähigkeit erhöht werden. Dabei können unterschiedliche Härtverfahren, wie z.B. Umwandlungshärtung Kornfeinung, Ausscheidungshärtung, Mischkristallverfestigung, Kaltverfestigung, etc., zu Anwendung kommen. Des Weiteren ist es von Vorteil, wenn die Ratsche bezüglich des Härtegrads entsprechend dem zugehörigen Gegenstück ausgebildet ist, damit die Ratsche und das Gegenstück ein korrelierendes Paar ergeben.

Gemäß einem weiteren Aspekt der vorliegenden Erfindung kann die Ratsche derart konzipiert werden, dass die Umlauffläche wenigstens eine Arretiervorrichtung aufweist, das Klemmelement integral mit dem stegförmigen Abschnitt ausgebildet ist und ein separat von der Ratsche vorgesehenes Einsatzelement bildet sowie wenigstens ein derart ausgebildetes Einsatzelement in der wenigstens einen Arretiervorrichtung arretierbar ist.

Als Vorteil kann hierbei die Modularität der Ratsche gesehen werden. Sind wenige, z.B. drei oder vier, Einsatzelemente in der Arretiervorrichtung arretiert, kann ein bestimmtes Drehmoment auf das Gegenstück übertragen werden. Falls die Ratsche das Gegenstück mit einem größeren Drehmoment, als für die drei Einsatzelemente vorgesehen, beaufschlagt, dreht die Ratsche in Drehmomentübertragungsrichtung durch. Demnach kann auf einfache Weise eine Drehmomentbegrenzung der Ratsche erreicht werden, ohne größere konstruktive Maßnahmen durchzuführen. Ein Überdrehen oder Zerstören des Gewindes des Gegenstücks kann auf vorteilhafte Weise vermieden werden. Sollte dennoch ein größeres Drehmoment auf das Gegenstück aufgebracht werden müssen, kann durch Arretieren eines oder mehrer Einsatzelemente in die Arretiervorrichtung die mögliche Drehmomentübertragung von der Ratsche auf das Gegenstück erhöht werden. Obgleich vorstehend die Arretierbarkeit von einzelnen Einsatzelementen diskutiert wurde, können die Einsatzelemente auf einem Ring zusammengefasst werden, der sodann in das Drehpunktgehäuse arretierbar ist. Für eine Anpassung des zu übertragenden Drehmoments können auf vorteilhafte Weise Ringe mit z.B. vier oder sechs Klemmelementen ausgebildet sein. Diese unterschiedlichen Ringe können dann je nach Bedarf im Drehpunktgehäuse der Ratsche arretiert werden.

Ein weiterer Aspekt der Erfindung betrifft die Verwendung der vorstehend diskutierten Ratsche im Medizinbereich, insbesondere im Dentalbereich, zum Übertragen eines Drehmoments auf ein Gegenstück, wobei das Gegenstück im Wesentlichen zylindrisch ausgebildet ist.

Ein erfindungsgemäßes Verfahren zum Übertragen eines aufzubringenden Drehmoments auf ein, vorzugsweise zylindrisch ausgebildetes, Gegenstück vermittels der vorstehend beschriebenen Ratsche weist gemäß einem anderen Aspekt der Erfindung die folgenden Schritte auf: Aufbringen der Ratsche auf das Gegenstück in axiale Richtung durch Aufsetzen der Ratsche auf das Gegenstück und Drehen der Ratsche in eine Freilaufrichtung bei gleichzeitigem Absenken der Ratsche entlang des Gegenstücks; Fixieren der Ratsche auf dem Gegenstück und Übertragen des Drehmoments auf das Gegenstück durch Drehen der Ratsche in eine Drehmomentübertragungsrichtung, wobei das Gegenstück gegen die Klemmflächen der Klemmelemente drückt und die Ratsche das Gegenstück in die Drehmomentübertragungsrichtung mitnimmt, wodurch das Drehmoment von der Ratsche auf das Gegenstück übertragen wird; Freigeben des Gegenstücks durch Drehen der darauf befindlichen Ratsche gegen die Drehmomentübertragungsrichtung; und Lösen der Ratsche vom Gegenstück durch Drehen in die Freilaufrichtung mit gleichzeitigem Abnehmen der Ratsche vom Gegenstück in axiale Richtung.

Gemäß einer Ausführungsform des erfindungsgemäßen Verfahrens, werden die Schritte Fixieren der Ratsche auf dem Gegenstück und Übertragen des Drehmoments auf das Gegenstück durch Drehen der Ratsche in die Drehmomentübertragungsrichtung sowie Freigeben des Gegenstücks durch Drehen der darauf befindlichen Ratsche gegen die Drehmomentübertragungsrichtung wiederholt ausgeführt werden, bevor die Ratsche vom Gegenstück gelöst wird.

Mit dem erfindungsgemäßen Verfahren sowie der erfindungsgemäßen Verwendung der Ratsche lassen sich dabei in analoger Weise die gleichen Vorteile erzielen wie vorstehend in Zusammenhang mit der Ratsche diskutiert. Zur Vermeidung von Wiederholungen wird daher auf eine erneute Aufzählung derselben verzichtet.

Die vorstehend beschriebenen Merkmale und Funktionen der vorliegenden Erfindung sowie weitere Aspekte und Merkmale werden nachfolgend anhand einer detaillierten Beschreibung von bevorzugten Ausführungsformen unter Bezugnahme auf die beigefügten Figuren weiter beschrieben. Hierbei zeigt:
- Fig. 1: eine schematisch perspektivische Ansicht einer erfindungsgemäße Ratsche;
- Fig. 2a: eine Querschnittsansicht der Ratsche aus Fig. 1;
- Fig. 2b: eine Detailansicht eines geschwenkten Klemmelements im Querschnitt bei Drehung der Ratsche in Freilaufrichtung;
- Fig. 2c: eine Detailansicht des geschwenkten Klemmelements im Querschnitt bei Drehung der Ratsche in Drehmomentrichtung;
- Fig. 3a: eine Querschnittsansicht der Ratsche mit unterschiedlichen Klemmelementen;
- Fig. 3b: eine Querschnitt des Ausschnitts A aus Fig. 3a;
- Fig. 4a: eine schematische Querschnittsansicht eines Klemmelements mit zwei in Dickenrichtung der Ratsche benachbarten, stegförmigen Abschnitten;
- Fig. 4b: eine schematische Querschnittsansicht eines Klemmelements mit zwei stegförmigen Abschnitten, wobei ein stegförmiger Abschnitt an einer ersten Seitenfläche angeordnet ist und der andere stegförmige Abschnitt an einer zweiten Stirnfläche angeordnet ist;
- Fig. 4c: eine schematische Querschnittsansicht eines Klemmelements mit zwei stegförmigen Abschnitten, wobei ein stegförmiger Abschnitt an einer ersten Seitenfläche angeordnet ist und der andere stegförmige Abschnitt einer der ersten Seitenfläche gegenüberliegenden zweiten Seitenfläche angeordnet ist;
- Fig. 4d: eine schematische Querschnittsansicht eines Klemmelements mit einem stegförmigen Abschnitt, wobei die Umlauffläche eine dem Klemmelement zur Abstützung bei Drehung in Drehmomentübertragungsrichtung dienende Erhöhung aufweist;
- Fig. 4e: eine schematische Querschnittsansicht eines Klemmelements mit einem stegförmigen Abschnitt, wobei die Klemmfläche derartig ausgebildet ist, dass diese zur Abstützung gegen die Umlauffläche bei Drehung in Drehmomentübertragungsrichtung dient;
- Fig. 5a: eine schematisch perspektivische Ansicht einer Ratsche mit zwei Griffstücken;
- Fig. 5b: eine schematisch perspektivische Ansicht einer Ratsche mit zwei gegenüberliegenden Griffstücken;
- Fig. 5c: eine schematisch perspektivische Ansicht einer Ratsche mit vier periodisch angeordneten Griffstücken;
- Fig. 6a: eine schematisch perspektivische Ansicht einer Ratsche mit einem Anschlag und einer am Griffstück angeordneten Aufnahme;
- Fig. 6b: eine Querschnitt des Schnitts A-A aus Fig. 6a;
- Fig. 7a: eine schematisch perspektivische Ansicht einer Ratsche, bei der die Drehachse des Drehpunktgehäuses und die Längsachse des Griffstücks zueinander beabstandet sind;
- Fig. 7b: eine schematisch perspektivische Ansicht einer gekröpften Ratsche, bei der sich die Drehachse des Drehpunktgehäuses und die Längsachse des Griffstücks in einem Winkel schneiden;
- Fig. 7c: eine schematisch perspektivische Ansicht der gekröpften Ratsche aus Fig. 7b mit einem abgewinkelten Griffstück;
- Fig. 8a: eine schematische Querschnittsansicht einer Ratsche mit Arretiervorrichtung;
- Fig. 8b: eine Detailansicht des Ausschnitts A aus Fig. 8a für eine erste Arretiermöglichkeit;
- Fig. 8c: eine Detailansicht des Ausschnitts B aus Fig.8a für eine zweite Arretiermöglichkeit;
- Fig. 8d: eine schematisch perspektivische Ansicht einer dritten Arretiermöglichkeit;
- Fig. 9a: eine schematisch perspektivische Ansicht einer Ratsche, wobei die Klemmelemente mit deren stegförmigen Abschnitte an einer äußeren Umlauffläche angeordnet sind; und
- Fig. 9b: eine schematisch perspektivische Ansicht der Ratsche aus Fig. 9a mit einem abgewinkelten Griffstück.

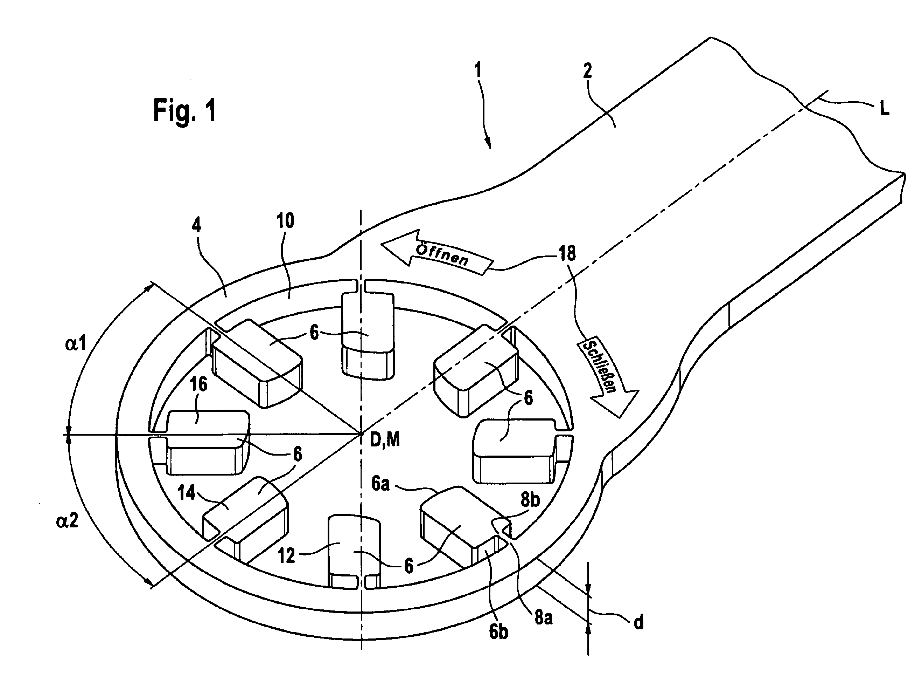

Fig. 1 stellt eine schematisch perspektivische Ansicht einer erfindungsgemäßen Ratsche 1 gemäß einer ersten beispielhaften Ausführungsform der vorliegenden Erfindung dar.

Die Ratsche 1 gemäß dieser Ausführungsform ist einstückig ausgebildet und besteht aus einem Griffstück 2, einem Drehpunktgehäuse 4, mehreren Klemmelementen 6 mit zugehörigen stegförmigen Abschnitten 8, welche die gleiche Dicke d aufweisen. Alternativ ist es möglich, die einzelnen, vorstehend aufgezählten Bestandteile der Ratsche 1 mit unterschiedlichen Dicken d vorzusehen, um den unterschiedlichen Beanspruchungen sowie der Kraftverteilung innerhalb der Ratsche 1 Rechnung zu tragen.

Die einstückige Ratsche 1 wird durch zwei Achsen, nämlich eine sich entlang des Griffstücks 2 erstreckende Längsachse L und eine einen Drehpunkt M des Drehpunktgehäuses 4 beschreibende Drehachse D, näher beschrieben, wobei diese bei der vorliegenden Ausführungsform in Fig. 1 senkrecht zueinander stehen. Das Griffstück 2 und das Drehpunktgehäuse 4 laufen harmonisch ineinander über, so dass die Drehmomentübertragung wirksam durchgeführt werden kann.

An der im Drehpunktgehäuse 4 ausgebildeten, zylindrischen Umlauffläche 10 sind bei dieser Ausführungsform acht Klemmelemente 6 mit den dazugehörigen stegförmigen Abschnitten 8 in einer derart periodischen Anordnung ausgebildet, so dass die acht Klemmelemente 6 jeweils einen konstanten Winkel α zueinander aufweisen. Darüber hinaus weisen die acht Klemmelemente 6 neben der periodischen Anordnung zusätzlich eine Punktsymmetrie gegenüber der Drehpunkt M auf. Exemplarisch werden zur Verdeutlichung ein Winkelabstand α₁ zwischen dem Klemmelement 12 und 14 und ein Winkelabstand α₂ zwischen dem Klemmelement 14 und 15 herangezogen, welche ein gleiches Winkelmaß (α₁=α₂) aufweisen. Die entsprechenden Winkel α werden dabei jeweils zwischen den beiden gedachten Mittelachsen der jeweiligen benachbarten, stegförmigen Abschnitte 8 gemessen. Obgleich bei der ersten Ausführungsform acht Klemmelemente 6 dargestellt sind, kann die Ratsche 1 eine beliebige Mehrzahl von Klemmelementen 6 aufweisen, wie z.B. vier, fünf, sechs oder mehr Klemmelemente 6. Zudem ist auch eine Ausbildung einer Ratsche 1 mit lediglich einem Klemmelement 6 möglich.

Mit dem stegförmigen Abschnitt werden die Klemmelemente 6, die eine erste Stirnfläche 6a und eine zweite Stirnfläche 6b aufweisen, an der Umlauffläche 10 angeordnet. Hierbei ist ein der Umlauffläche 10 zugewandtes Ende 8 a des stegförmigen Abschnitts 8 an der Umlauffläche 10 angeordnet und ein dem Klemmelement 6 zugewandtes Ende 8b des stegförmigen Stegs 8 ist an der zweiten Stirnfläche 6b des Klemmelements 6 angeordnet.

Markierungen 18 auf der Ratsche 1, hier im Bereich des Griffstücks 2 aufgebracht, die eine Öffnen/Schließrichtung anzeigen, dienen dem Benutzer für eine einfache Handhabung der Ratsche 1, so dass Verletzungen am Gewebe oder im Mundbereich wirksam vermieden werden können. Hiermit ist es für den Benutzer klar ersichtlich, in welche Richtung er die Ratsche 1 für eine Drehmomentübertragung respektive Freilauf betätigen muss. Die auf der Ratsche befindlichen Markierungen 18 können auch aufgeklebt, geätzt, graviert oder durch eine andere Hoch-, Tief-, Durch- oder Flachdrucktechnik ausgebildet werden.

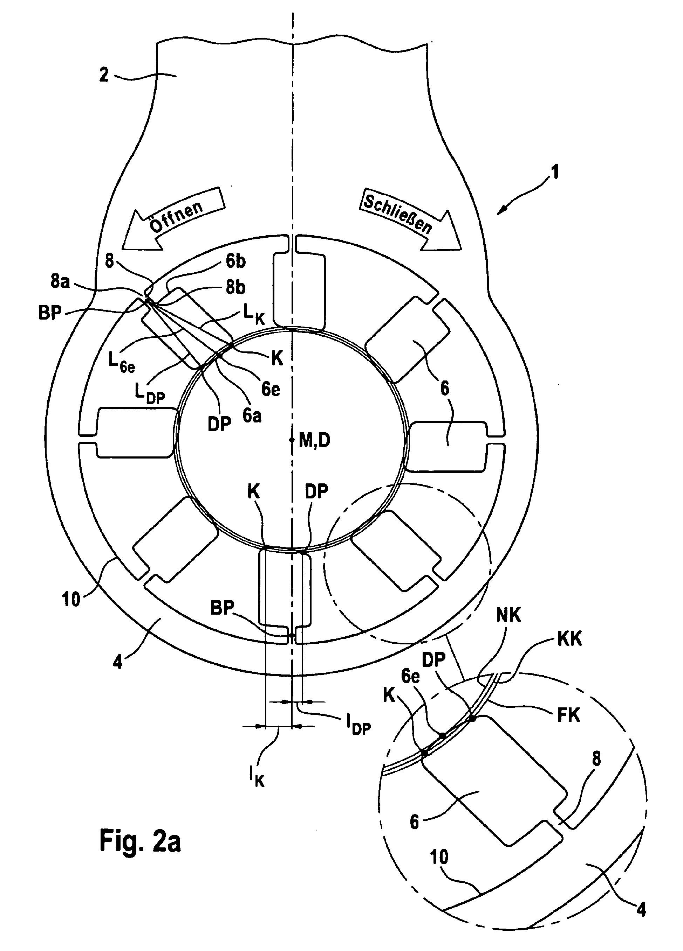

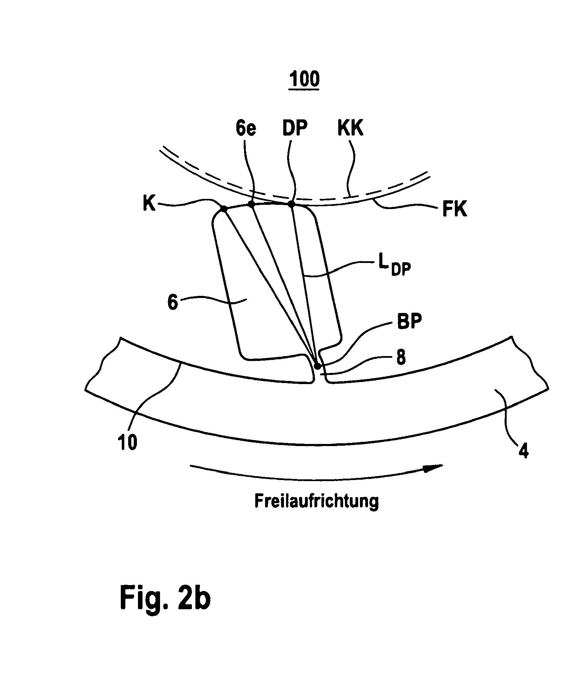

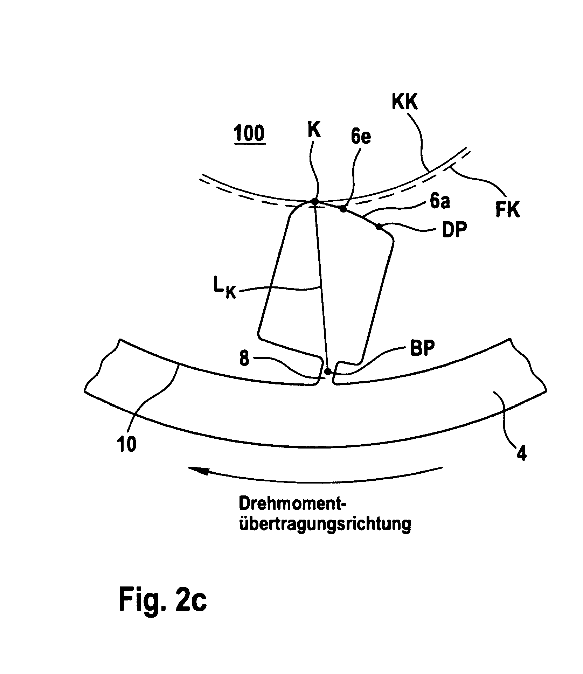

Fig. 2a stellt eine Querschnittsansicht der Ratsche 1 nach Fig. 1 dar. Um die Funktionsweise der Ratsche 1 näher zu erläutern, werden neben der Fig. 2a im Folgenden die Fig. 2b und 2c herangezogen. Es sei darauf hingewiesen, dass z.B. die Abstände der Kreise zueinander sowie zwischen Bereichen oder einzelnen Punkte absichtlich für eine eingängigere Erklärung der Funktionsweise der Ratsche 1 und vergrößert dargestellt wurden.

Wie bereits vorstehend diskutiert, sind die Klemmelemente 6 punktsymmetrisch bezüglich der Drehachse D und mit einem konstanten Winkel α zueinander periodisch angeordnet. Die Ausbildung der einzelnen Klemmelemente 6 an der Umlauffläche 10 soll im Folgenden näher erläutert werden. Das Klemmelement 6 mit der Klemmfläche 6a weist den stegförmigen Abschnitt 8 auf, wobei das dem Klemmelement 6 zugewandte Ende 8b des stegförmigen Abschnitts 8 an einer zweiten Stirnfläche 6b, beabstandet von einer gedachten Mittellinie des Klemmelements 6, angeordnet ist. Das der Umlauffläche 10 zugewandte Ende 8a des stegförmigen Abschnitts 8 ist an der Umlauffläche 10 angeordnet. Ferner weist die Klemmfläche 6a einen maximalen Entfernungspunkt 6e auf, der in Bezug auf die gedachte Mittellinie des Klemmelements 6 diametral einer Seite gegenüberliegt, an der die zweite Stirnfläche 6b mit dem Klemmelement 6 zugewandten Ende 8b des stegförmigen Abschnitts 8 verbunden ist. Mithilfe dieser diametral gegenüberliegenden Ausbildung kann sowohl die Klemmwirkung als auch der Freilauf besonders gut genutzt werden.

In Fig. 2a sind drei gedachte Kreise gezeigt, ein Nullkreis NK, ein Freilaufkreis FK und ein Klemmkreis KK, die alle ihren Mittelpunkt M koaxial zur Drehachse D aufweisen. Der Nullkreis NK weist einen Radius auf, der sich von dessen Mittelpunkt M zu einem maximalen Entfernungspunkt 6e aus der Mehrzahl der Klemmelemente 6 erstreckt, wobei der Nullkreis NK den geringsten Durchmesser der drei gedachten Kreise aufweist. Der Freilaufkreis FK, der auch als Aufnahmekreis dient, weist einen Radius auf, der sich vom Mittelpunkt M bzw. der koaxial befindlichen Drehachse D bis zu einem auf der Klemmfläche 6a befindlichen gedachten Druckpunkt DP erstreckt. Ferner ist der Durchmesser des Freilaufkreises FK größeren als der des Nullkreises NK. Der Durchmesser des Klemmkreises KK erstreckt sich vom Mittelpunkt M bis zu einem auf der Klemmfläche 6a befindlichen gedachten Klemmpunkt K, der auf der Klemmfläche 6a derart positioniert, dass er zum einen, vom maximalen Entfernungspunkt 6e betrachtet, auf der anderen Seite der Klemmfläche 6a liegt, und zum anderen einen Durchmesser aufweist, der zwischen dem des Nullkreises NK und dem des Freilaufkreises FK liegt.

Das dazugehörige Gegenstück 100 sollte einen größeren Durchmesser aufweisen als der Nullkreis NK, damit die Drehmomentübertragung sichergestellt werden kann. Wenn ein geringerer Durchmesser als der Nullkreis NK gewählt werden sollte, könnte das Gegenstück 100 nicht fixiert werden und es würde in beide Richtungen freilaufen. Die Klemmflächen 6a und das Gegenstück 100 müssen zueinander derart abgestimmt sein, dass der Durchmesser des Gegenstücks 100 größer als der Nullkreis NK ist, jedoch nicht größer als der Durchmesser des Freilaufkreises FK. Damit die Ratsche 1 auf einfache Weise auf das Gegenstück 100 aufgesetzt werden kann, ist es hilfreich, das Gegenstück 100 abgefast zu gestalten, so dass eine abgefaste Kante 102 einen kleineren Durchmesser aufweist als der Nullkreis NK. Wenn das Gegenstück 100 angesichts äußerer Einflüsse vorgegeben ist, wie beispielweise Implantatgröße, ist die Ratsche 1, und hier insbesondere die Klemmfläche 6a, derart zu wählen, dass sich darauf der Klemmpunkt K und der Druckpunkt DP befindet.

Jedes einzelne Klemmelement 6 weist verschiedene Wirklängen L auf. In Fig. 2a wird anhand eines eingezeichneten Biegpunkts BP des stegförmigen Abschnitts die Wirklänge L näher erläutert werden. Der Abstand zwischen Biegepunkt BP und dem maximalen Entfernungspunkt 6e ergibt eine erste wirkende Länge bzw. Wirklänge L₆ₑ, der Abstand zwischen Biegepunkt BP und dem gedachten Druckpunkt DP ergibt eine zweite wirkende Länge bzw. Wirklänge L_{DP} und der Abstand zwischen Biegepunkt BP und dem gedachten Klemmpunkt K ergibt eine dritte wirkende Länge bzw. Wirklänge L_{K}.

Der zwischen der zweiten Stirnfläche 6b und dem Klemmelement 6 zugewandten Ende 8b befindliche Biegepunkt BP ist nicht ein einzelner Punkt, sondern muss vielmehr als streifenförmiger bzw. linearer Bereich angesehen werden. Beispielsweise ist es auch möglich, dass sich der Biegepunkt BP zwischen dem der Umlauffläche 10 zugewandten Ende 8a des stegförmigen Abschnitts 8 und der Umlauffläche 10 befindet oder aber über die komplette Länge des stegförmigen Abschnitts 8 verläuft. Denkbar ist auch, dass das Klemmelement 6 bei einer speziellen Ausbildung biegbar ist, wie z.B. das Klemmelement 28 in Fig. 2a. Die vorstehend diskutierten Wirklängen L würden sich somit entsprechend in Abhängigkeit des Biegepunktes BP verändern.

Um die Funktion der Wirklänge L_{DP} und somit die Länge zwischen dem Biegepunkt BP und dem Druckpunkt DP im Detail zu beschreiben, wird ferner Fig. 2b verwiesen. Fig. 2b stellt eine Detailansicht des geschwenkten Klemmelements 6 im Querschnitt bei Drehung der Ratsche 1 in Freilaufrichtung, welche in Pfeilrichtung dargestellt ist, dar. Das Klemmelement 6 wird dabei entgegen die Freilaufrichtung geschwenkt und das Gegenstück 100 kontaktiert die Klemmfläche 6a lediglich an dem Druckpunkt DP. Analog werden alle an der Umlauffläche 10 angeordneten Klemmelemente 6 auf diese Weise geschwenkt, wobei sich die entsprechenden Druckpunkte DP der Klemmflächen 6a auf dem Freilaufkreis FK befinden, der in Fig. 2b mit einer durchgezogenen Linie dargestellt ist. Mit einer gestrichelten Linie ist der Klemmkreis KK gezeigt, der einen kleinen Durchmesser als der Freilaufkreis FK aufweist. Die wirkende Länge des Klemmelements 6 auf das Gegenstück 100 in Freilaufrichtung bzw. Aufnahmerichtung ist somit L_{D}, welche sich vom Druckpunkt DP bis zum Biegepunkt BP erstreckt. Sowohl die Wirklängen L_{K} und L₆ₑ als auch der maximale Entfernungspunkt 6e und der Klemmpunkt K erfüllen bei Drehung der Ratsche 1 in Freilaufrichtung bzw. Aufnahmerichtung keine Funktion. Der Biegepunkt BP liegt bei der Detailansicht in Fig. 2c über die komplette Länge des stegförmigen Abschnitts 8, d.h. der stegförmige Abschnitt biegt sich über dessen Länge kontinuierlich durch.

In Fig. 2c ist eine Detailansicht des geschwenkten Klemmelements 6 bei Drehung der Ratsche 1 in Drehmomentrichtung im Querschnitt dargestellt. Das Klemmelement 6 wird entgegen der Drehmomentübertragungsrichtung, welche durch einen Pfeil gekennzeichnet ist, geschwenkt und kontaktiert lediglich am Klemmpunkt K das Gegenstück 100. Analog werden alle auf der Umlauffläche 10 angeordneten Klemmelemente 6 auf diese Weise geschwenkt, wobei sich die entsprechenden Klemmpunkte K der Klemmflächen 6a auf dem Klemmkreis KK befinden, der in Fig. 2c mit einer durchgezogenen Linie dargestellt ist. Mit einer gestrichelten Linie ist ein Ausschnitt des Freilaufreises FK gezeigt, der einen größeren Durchmesser als der Klemmkreiskreis KK aufweist. Die wirkende Länge des Klemmelements 6 auf das Gegenstück 100 in Drehmomentrichtung ist somit L_{K}, und erstreckt sich vom Klemmpunkt K bis zum Biegepunkt BP. Sowohl die Wirklängen L_{DP} und L₆ₑ als auch der maximale Entfernungspunkt 6e und der Druckpunkt DP erfüllen bei Drehung der Ratsche 1 in Drehmomentrichtung keine Funktion. Der Biegepunkt BP liegt bei der Detailansicht in Fig. 2c über die komplette Länge des stegförmigen Abschnitts 8.

Der Klemmpunkt K wirkt als Kraftangriffspunkt, der beim Drehen der Ratsche 1 in Drehmomentübertragungsrichtung eine Kontaktstelle zwischen Klemmfläche 6a und der Oberfläche des Gegenstücks 100 bildet, und bei dem die jeweiligen Klemmelemente 6 an die Oberfläche des Gegenstücks 100 gepresst werden. Hierbei entsteht am Biegpunkt BP ein erster Drehpunkt. Ein erster Hebelarm I_{K} ist dabei ein erster Abstand, der sich senkrecht zur gedachten Mittellinie des Klemmelements 6 vom Klemmpunkt K zum Biegepunkt BP erstreckt. Durch die vom Klemmelement 6 auf die Oberfläche des Gegenstücks 100 aufgebrachte Kraft und mit dem durch den ersten Abstand definierten ersten Hebelarm I_{K} ergibt sich ein Klemmmoment M_{K}, das als positives Moment definiert wird. Das Klemmmoment M_{K} ist hauptsächlich von der Kontur, deren erster und zweiter Ableitung und der Anordnung des stegförmigen Abschnitts 8 abhängig. Unter Zuhilfenahme einer Sinus-, Kosinus-, Tangens-, Exponential- oder logarithmischen Funktion kann die Steigung und Krümmung derart gezielt eingestellt werden, dass eine gewünschte Klemmwirkung erreicht wird.

Der Druckpunkt DP stellt einen weiteren Kraftangriffspunkt dar, bei dem beim Drehen der Ratsche 1 in Freilaufrichtung die Oberfläche des Gegenstücks 100 auf die Klemmfläche drückt. Hierbei entsteht wiederum am Biegepunkt BP ein zweiter Drehpunkt. Ein zweiter Hebelarm I_{DP} ist ein zweiter Abstand, der sich senkrecht zur gedachten Mittellinie des Klemmelements 6 vom Druckpunkt DP zum Biegepunkt BP erstreckt. Durch die von der Oberfläche des Gegenstücks 100 auf die Klemmelemente 6 aufgebrachte Kraft und mit dem durch den zweiten Abstand definierten zweiten Hebelarm l_{DP} ergibt sich ein Druckmoment M_{DP}. Das Druckmoment M_{DP} wirkt bezüglich des Klemmmoments M_{K} in eine entgegengesetzte Richtung und wird als negatives Drehmoment definiert. Das Druckmoment M_{DP} ist ebenfalls, wie das Klemmmoments M_{K}, von der Kontur, deren erster und zweiter Ableitung und der Anordnung des stegförmigen Abschnitts 8 abhängig.

Bei der praktischen Umsetzung sind unter dem Druckpunkt DP sowie dem Klemmpunkt K keine exakten Punkte zu verstehen, sondern vielmehr Bereiche. So ist z.B. beim Klemmpunkt K ein Bereich zu verstehen, der beim Drehen der Ratsche 1 in Drehmomentrichtung zunächst eine geringe Klemmwirkung auf das Gegenstück 100 aufbringt. Die Klemmwirkung steigt mit Drehen der Ratsche 1 allmählich weiter an. Analog verhält sich die Biegespannung des Klemmelements 6 und des stegförmigen Abschnitts 8 bei Drehung der Ratsche 1 in Drehmomentübertragungsrichtung.

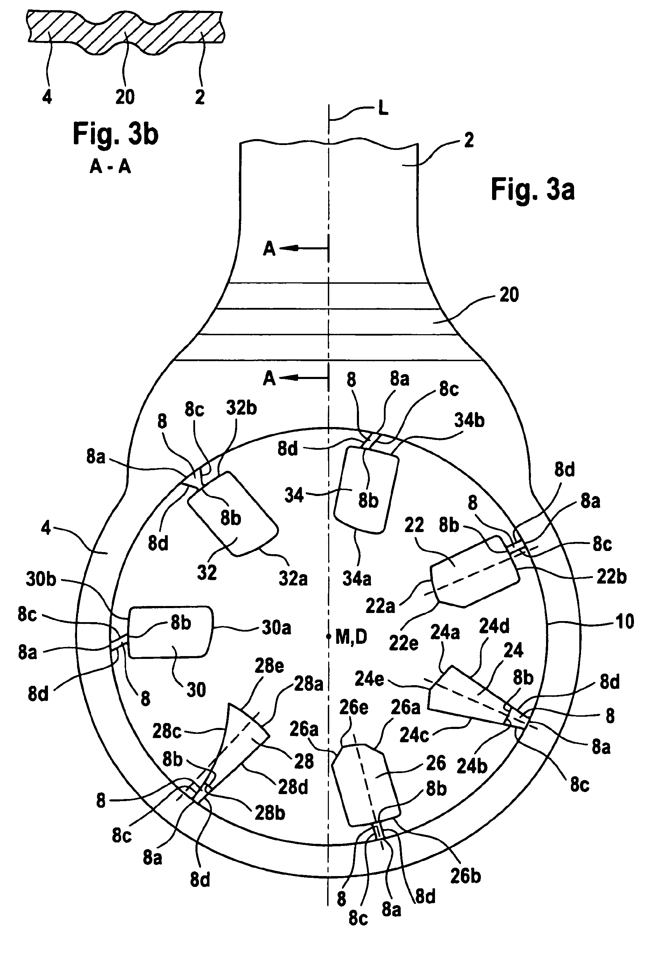

Fig. 3a stellt eine Querschnittsansicht der einstückigen Ratsche 1 gemäß einer weiteren Ausführungsform der vorliegenden Erfindung dar.

In Fig. 3 a wird zwischen dem Griffstück 2 und dem Drehpunktgehäuse 4 ein federartiger, zumindest senkrecht zur Drehachse D teilelastischer bzw. biegsamer, Übergang 20 dargestellt, welcher in Fig. 3b als Querschnitt dargestellt ist. Hierbei ist in Fig. 3b besonders gut die mäanderförmige Ausbildung des Übergangs zu erkennen. Vorteilhaft ist diese Ausbildung für das Aufsetzen der einstückig ausgebildeten Ratsche 1 auf das Gegenstück 100.

Ferner ist auch bei der in Fig. 3a gezeigten Ratsche 1 die periodische Anordnung der Klemmelemente entlang der Umlauffläche 10 gewählt. Zudem zeigt Fig. 3 a eine Auswahl unterschiedlich ausgebildeter Klemmelemente 6 die zur Anwendung kommen können, wobei nur polygonförmig ausgebildete Klemmelemente als erfindungsgemäße Klemmelemente gelten. Die nicht polygonförmig ausgebildeten Klemmelemente zeigen denkbare Alternativen, die als solches nicht unter den durch die Ansprüche definierten Schutzumfang der vorliegenden Erfindung fallen. Zur besseren Übersichtlichkeit wurde in Fig. 3a auf die Eintragung der Winkel α zwischen den jeweiligen Klemmelementen sowie auf die Markierung 18 verzichtet. Die bereits vorstehend erwähnten Unterschiede zwischen den an der Umlauffläche 10 angeordneten Klemmelementen 22 bis 34 werden nachfolgend im Detail erläutert.

Ein hier dargestelltes, alternatives Klemmelement 22 mit einer Klemmfläche 22a weist den stegförmigen Abschnitt 8 auf, wobei das dem Klemmelement 6 zugewandte Ende 8b des stegförmigen Abschnitts 8 an einer zweiten Stirnfläche 22b beabstandet von einer gedachten Mittellinie des Klemmelements 22 angeordnet ist. Das der Umlauffläche 10 zugewandte Ende 8a des stegförmigen Abschnitts 8 ist an der Umlauffläche 10 angeordnet. Das Klemmelement 22 ist polygonförmig mit fünf Ecken ausgebildet, wobei die Klemmfläche 22a einen maximalen Entfernungspunkt 22e bildet. Der maximale Entfernungspunkt 22e ist der maximale senkrechte Abstand zwischen der ersten Stirnfläche bzw. Klemmfläche 22a und der zweiten Stirnfläche 22b. Der maximalen Entfernungspunkt 22a liegt auf der Klemmfläche 22a und unterteilt diese in zwei Flächen, die vorzugsweise eine unterschiedliche Steigungen aufweisen. Außerdem liegt der maximale Entfernungspunkt 22e diametral der Verbindung zwischen stegförmigen Abschnitts 8 und Klemmelement 22 bezüglich einer gedachten Mittelachse des Klemmelements 22 gegenüber.

Ein trichterförmiges, zu der Umlauffläche 10 verjüngt zulaufendes Klemmelement 24 weist eine Klemmfläche 24a auf. Das der Umlauffläche 10 zugewandte Ende 8a des stegförmigen Abschnitts 8 ist an der Umlauffläche 6 angeordnet. Das dem Klemmelement 6 zugewandte Ende 8b des stegförmigen Abschnitts 8 weist die gleiche Breite wie die zweite Stirnfläche 24b des Klemmelements 24 auf. Somit gehen die Seitenflächen 8c, 8d des stegfömigen Abschnitts 8 "stoßfrei" bzw. "ansatzlos" in die Seitenflächen 24c, 24d des Klemmelements 24 über, so dass praktisch nicht erkennbar ist, bei welchem Bereich der stegförmige Abschnitt 8 in das Klemmelement 24 übergeht. Sowohl der stegförmige Abschnitt 8 mit dessen der Umlauffläche 10 zugewandten Ende 8a und dem Klemmelement 6 zugewandten Ende 8b als auch das Klemmelement 24 mit dessen ersten und zweiten Stirnflächen 24a, 24b liegen mittig auf der gedachten Mittellinie des Klemmelements 24, d.h. sie sind nicht von der gedachten Mittellinie beabstandet.

Die Klemmfläche 24a ist bei dem alternativen Klemmelement 24 als logarithmische Spirale ausgebildet. Der Mittelpunkt der logarithmischen Spirale befindet sich in dem Schnittpunkt, in dem sich die Umlauffläche 10 mit der gedachten Mittellinie des Klemmelements 24 schneiden. Ohne Weiteres kann der Schnittpunkt von der gedachten Mittelinie des Klemmelements 24 beabstandet sein, der Schnittpunkt auf der zweiten Stirnfläche 24b liegen, der Schnittpunkt auch auf der zweiten Stirnfläche 24b liegen und von der gedachten Mittelinie des Klemmelements 24 beabstandet sein, oder dergleichen. Der maximale senkrechte Abstand zwischen der ersten Stirnfläche bzw. Klemmfläche 24a und der zweiten Stirnfläche 24b bildet auf der Klemmfläche 24a einen maximalen Entfernungspunkt 24e. Hier liegt keine diametral gegenüberliegende Ausbildung des maximalen Entfernungspunkts 24e bezüglich der Verbindung zwischen dem Klemmelement 6 zugewandten Ende 8b des stegförmigen Abschnitts 8 und der zweiten Stirnfläche 24b vor.

Ein weiteres, polygonförmig ausgebildetes Klemmelement 26 weist einen mittig angeordneten, stegförmigen Abschnitt des Klemmelements 26 mit einer trapezförmigen Klemmfläche 26a auf. D.h. das dem Klemmelement 6 zugewandte Ende 8b des stegförmigen Abschnitts 8 ist nicht von der gedachten Mittelinie des Klemmelements beabstandet. Weiter befinden sich die die beiden Seitenflächen 8c, 8d des stegförmigen Abschnitts 8 sowohl zu der zweiten Stirnfläche 26b als auch zu der Umlauffläche 10 in einem rechten Winkel. Der senkrechte Abstand zwischen der ersten Stirnfläche bzw. Klemmfläche 26a und der zweiten Stirnfläche 26b ist durch die trapezförmige Ausbildung der Klemmfläche 26a eine maximale Entfernungsfläche 26e.

Ein alternatives Klemmelement 28 weist auf einer Seitenfläche 28c eine sichelförmige Ausbildung auf und auf der gegenüberliegenden Seitefläche 28d eine trichterförmige Ausbildung auf, ähnlich dem vorstehend diskutierten Klemmelement 24. Durch die sichelförmige Gestaltung kann wirksam nicht benötigtes Material einspart werden. Obgleich lediglich eine Seitenfläche 28c als Sichelform ausgebildet wurde, ist es ohne Weiteres möglich, beide Seitenflächen sichelförmig auszubilden.

Das Klemmelement 28 weist ferner eine radiale Klemmfläche 28a auf. Der dazugehörige Mittelpunkt des für die radiale Kontur der Klemmfläche 28a verantwortlichen Kreises liegt im Schnittpunkt zwischen der Umlauffläche 10 und der Mittellinie des Klemmelements 28. Dieser Mittelpunkt ist von dem Schnittpunkt, der durch die gedachte Mittelinie des stegförmigen Abschnitts und Umlauffläche 10 ausgebildet ist, beabstandet. Der maximale senkrechte Abstand zwischen der ersten Stirnfläche bzw. Klemmfläche 28a und der zweiten Stirnfläche 28b bildet auf der Klemmfläche 28a einen maximalen Entfernungspunkt 28e. Das der Umlauffläche 10 zugewandte Ende 8a des stegförmigen Abschnitts 8 ist an der Umlauffläche 10 angeordnet. Das dem Klemmelement 6 zugewandte Ende 8b des stegförmigen Abschnitts 8 weist die gleiche Breite wie die zweite Stirnfläche 28b des Klemmelements 28 auf. Somit laufen die Seitenflächen 8c, 8d des stegfömigen Abschnitts 8 stoßfrei in die Seitenflächen 28c, 28d des Klemmelements 28 über, so dass ebenfall nicht zu erkennen ist, bei welchem Bereich der stegförmige Abschnitt 8 in das Klemmelement 28 über geht. Der stegförmige Abschnitt 8 des dem Klemmelement 6 zugewandten Endes 8b ist an einer zweiten Stirnfläche 28b von einer gedachten Mittellinie des Klemmelements beabstandet angeordnet. Das der Umlauffläche 10 zugewandte Ende 8a des stegförmigen Abschnitts 8 ist an der Umlauffläche 6 angeordnet. Die Verbindung zwischen stegförmigen Abschnitts 8 und Klemmelement 28 liegt diametral dem maximalen Entfernungspunkt 28e bezüglich einer gedachten Mittelachse des Klemmelements 28 gegenüber.

Die alternativen Klemmelemente 30, 32 und 34 weisen jeweils den stegförmigen Abschnitt 8 mit einer Klemmfläche 30a, 32a und 34a auf, wobei der stegförmigen Abschnitt 8 das dem Klemmelement 6 zugewandte Ende 8b des stegförmigen Abschnitts an einer jeweiligen zweiten Stirnfläche 30b, 32b und 34b beabstandet von einer gedachten Mittellinie des Klemmelements angeordnet ist. Das der Umlauffläche. 10 zugewandte Ende 8a des jeweiligen stegförmigen Abschnitts 8 ist an der Umlauffläche 10 angeordnet.

Die Klemmelemente 30, 32 und 34 unterscheiden sich in der Ausgestaltung des stegförmigen Abschnitts 8. Das Klemmelement 30 weist bei dem stegförmigen Abschnitt 8 zwischen der zweiten Stirnfläche 30b und einer ersten Seitenfläche 8c einen stumpfen Winkel, zwischen der zweiten Stirnfläche 30b und einer zweiten Seitenfläche 8d einen spitzen Winkel, zwischen der Umlauffläche 10 und der ersten Seitenfläche 8c einen spitzen Winkel sowie zwischen der Umlauffläche 10 und der zweiten Seitenfläche 8d einen stumpfen Winkel auf Anders ausgedrückt ist der stegförmige Abschnitt wie eine Raute oder ein verschobenes Rechteck ausgebildet.

Bei dem Klemmelement 32 weist der stegförmige Abschnitt 8 zwischen der zweiten Stirnfläche 32b und einer ersten Seitenfläche 8c einen spitzen Winkel, zwischen der zweiten Stirnfläche 32b und einer zweiten Seitenfläche 8d einen spitzen Winkel, zwischen der Umlauffläche 10 und der ersten Seitenfläche 8c einen stumpfen Winkel sowie zwischen der Umlauffläche 10 und der zweiten Seitenfläche 8d einen stumpfen Winkel auf. Anders ausgedrückt ist der stegförmige Abschnitt wie ein Trapez ausgebildet.

Bei dem Klemmelement 34 weist der stegförmige Abschnitt 8 zwischen der zweiten Stirnfläche 34b und einer ersten Seitenfläche 8c einen spitzen Winkel, zwischen der zweiten Stirnfläche 34b und einer zweiten Seitenfläche 8d einen stumpfen Winkel, zwischen der Umlauffläche 10 und der ersten Seitenfläche 8c einen stumpfen Winkel sowie zwischen der Umlauffläche 10 und der zweiten Seitenfläche 8d einen spitzen Winkel auf. Anders ausgedrückt ist der stegförmige Abschnitt wie eine Raute oder ein verschobenes Rechteck ausgebildet.

Alternativ kann die Ausbildung der Kontur der Klemmfläche, wie z.B. durch eine logarithmische Spirale, einen konstanten Radius, dreiecksförmig, trapezförmig oder dergleichen, beliebig mit der stegförmigen Ausgestaltung der Klemmelemente 22 bis 34 kombiniert werden. Auch die Ausbildung der Seitenflächen der Klemmelemente 22 bis 34 kann variiert werden, z.B. kann das Klemmelement 22, 26, 30, 32 oder 34 eine trichterförmige oder sichelförmige Seitenflächengestaltung aufweisen. So kann beispielsweise ein Klemmelement die Konturoberfläche 22a, trichterförmige Seitenflächen und einen stegförmigen Abschnitt, wie bei Klemmelement 32 dargestellt, aufweisen. Ferner besteht die Möglichkeit, beispielsweise die Klemmelemente 28 und 24 abwechselnd in der Ratsche entlang der Umlauffläche anzuordnen. Die Ratsche 1 ist nicht nur auf eine Art von Klemmelement beschränkt. Vielmehr kann es nach Abstimmung der Steigung der Klemmflächen untereinander sachgemäß sein, unterschiedliche Klemmelemente zu verwenden, um die Klemmwirkung zu verbessern.

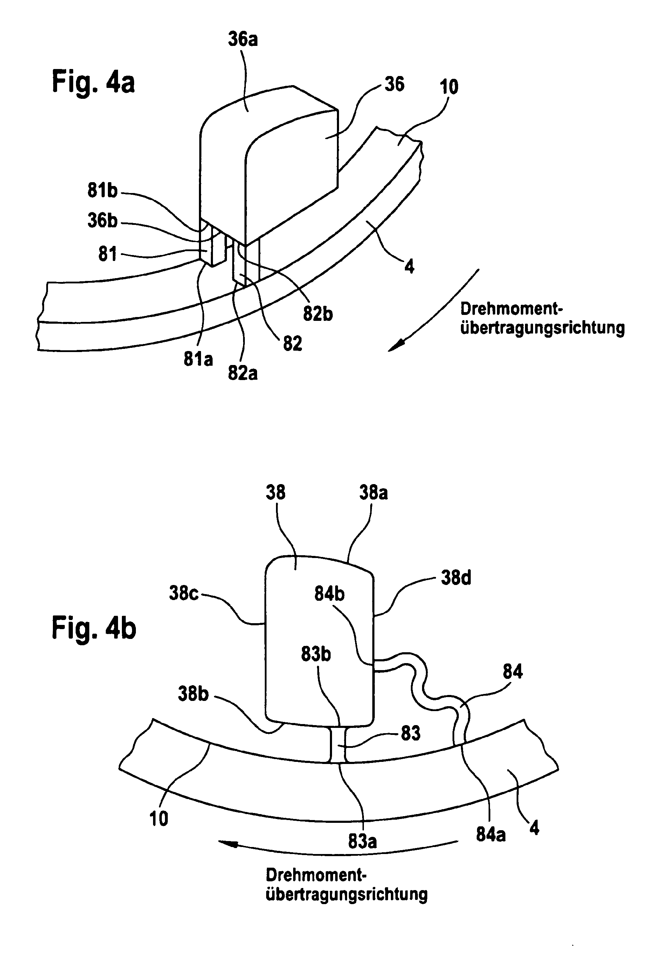

In Fig. 4a ist eine schematische Querschnittsansicht eines Klemmelements 36 mit zwei in Dickenrichtung d der Ratsche 1 benachbarten stegförmigen Abschnitte 81, 82 dargestellt. Die stegförmigen Abschnitte 81, 82 sind zum einen an deren jeweiligen der Umlauffläche 10 zugewandten Enden 81 a, 82a mit der Umlauffläche 10 des Drehpunktgehäuses 4 und zum anderen an den jeweiligen dem Klemmelement 6 zugewandten Enden 81b, 82b an der zweiten Stirnfläche 36b des Klemmelements 36 angeordnet. Beide stegförmigen Abschnitte 81, 82 weisen dabei eine gleiche Biegesteifigkeit.

In Fig. 4b ist eine schematische Querschnittsansicht eines Klemmelements 38 mit zwei stegförmigen Abschnitten 83, 84 gezeigt. Ein der Umlauffläche 10 zugewandtes Ende 83a eines der Umlauffläche 10 zugewandten stegförmigen Abschnitts 83 ist hierbei an der Umlauffläche 10 und ein dem Klemmelement 6 zugewandtes Ende 83b an einer zweiten Stirnfläche 38b angeordnet. Ein der Umlauffläche 10 zugewandtes Ende 84a eines zweiten stegförmigen Abschnitts 84 ist hierbei an der Umlauffläche 10 und ein dem Klemmelement 6 zugewandtes Ende 84b an einer Seitenfläche 38d angeordnet. Der zweite stegförmige Abschnitt 84 weist eine mäanderartige Form auf, um die Biegung des ersten stegförmigen Abschnitts 83 bzw. des Klemmelements 38 bei Drehen der Ratsche 1 in Drehmomentübertragungsrichtung zu vermeiden oder so gering wie möglich zu halten. Dagegen lässt der mäanderförmige zweite stegförmige Abschnitt 84 die Biegung des Klemmelements 38 bei Drehen der Ratsche 1 in Freilaufrichtung zu, so dass die Klemmfläche 38a nicht das Gegenstück 100 klemmt ist.

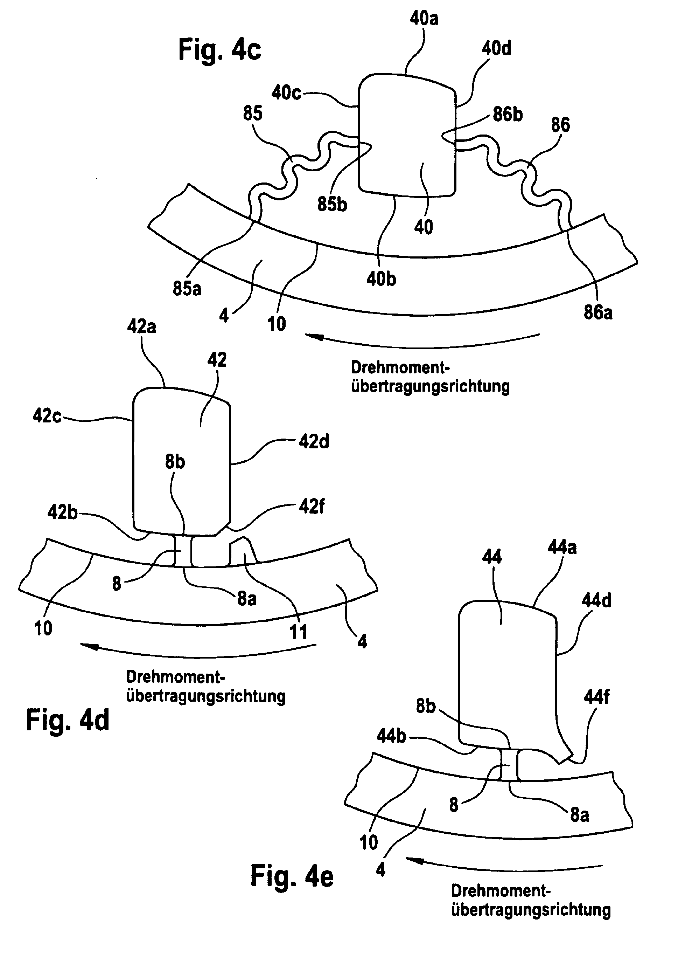

In Fig. 4c ist eine schematische Querschnittsansicht eines Klemmelements 40 mit zwei stegförmigen Abschnitten 85, 86 dargestellt. Ein erster stegförmiger Abschnitt 85 ist mit dessen der Umlauffläche 10 zugewandtem Ende 85a an der Umlauffläche 10 und mit dessen dem Klemmelement 6 zugewandtem Ende 85b an einer ersten Seitenfläche 40c des Klemmelements 40 angeordnet. Ein zweiter stegförmiger Abschnitt 86 ist mit dessen der Umlauffläche 10 zugewandten Ende 86a an der Umlauffläche 10 und mit dessen dem Klemmelement 6 zugewandten Ende 86b an einer zweiten Seitenfläche 40d des Klemmelements 40 angeordnet. Beide stegförmigen Abschnitte 85, 86 weisen eine mäanderartige Form auf, wobei vorteilhaft der zweite mäanderförmige, stegförmige Abschnitt eine größere Druckfestigkeit aufweist als der erste mäanderförmige stegförmige Abschnitt. So kann, ähnlich wie bei Fig. 4b, in Drehmomentübertragungsrichtung das Klemmelement 40 das Gegenstück 100 klemmen und eine Drehmomentübertragung ermöglichen.

In Fig. 4d ist eine schematische Querschnittsansicht eines Klemmelements 42 mit einem stegförmigen Abschnitt 8 dargestellt, wobei die Umlauffläche 10 eine dem Klemmelement 42 zur Abstützung bei Drehung in Drehmomentübertragungsrichtung dienende Erhöhung 11 aufweist. Der stegförmige Abschnitt 8 ist wie der erste stegförmige Abschnitt 83 in Fig. 4b angeordnet und wird hier nicht nochmals im Einzelnen ausgeführt. Beim Übertragen eines Drehmoments auf ein Gegenstück 100 kann sich der stegförmige Abschnitt 8 durchgebogen werden. Durch eine gezielte Anordnung der Erhöhung 11 auf der Umlauffläche 10 wird bei Drehung der Ratsche 1 in Drehmomentübertragungsrichtung die unerwünschte Durchbiegung des stegförmigen Abschnitts 8 und/oder des Klemmelements 42 wirksam vermieden, da sich die Abstützfläche 42f des Klemmelements 42 an der Erhöhung 11 abstützt. Die Abstützfläche 42f kann sich über einen Bereich der zweiten Stirnfläche 42b und/oder einen Bereich der Seitenfläche 42d erstrecken. In Fig. 4d ist die Abstützfläche 42f eine abgefaste Kante zwischen der Seitenfläche 42d und zweiter Stirnfläche 42b. Dementsprechend kann die Erhöhung 11 derart gestaltet sein, dass sie auf die Abstützfläche 42f abgestimmt ist.

In Fig. 4e ist eine schematische Querschnittsansicht eines Klemmelements 44 mit einem stegförmigen Abschnitt 8, wobei die Klemmfläche 44 eine derartige Ausbildung aufweist, dass diese zur Abstützung gegen die Umlauffläche 10 bei Drehung in Drehmomentübertragungsrichtung dient. Der stegförmige Abschnitt 8 ist, wie der erste stegförmige Abschnitt 83 in Fig. 4b oder der erste stegförmige Abschnitt 8 in Fig. 4d, angeordnet und wird hier nicht nochmals im Einzelnen ausgeführt. Im Gegensatz zu Fig. 4d, bei der die Erhöhung 11 zur Abstützung des Klemmelements 38 dient, dient in Fig. 4e eine nasenförmige, vorstehende Abstützfläche 44f zur Abstützung gegen die Umlauffläche 10, um bei Drehen der Ratsche 1 in Drehmomentübertragungsrichtung nicht unerwünscht durchgebogen zu werden. Die nasenförmige, vorstehende Abstützfläche 44f kann im Bereich der zweiten Stirnfläche 44b und/oder im Bereich der Seitenfläche 44d von dem Klemmelement 44 hervorragen. Auch hier ist es sachgemäß, dass die nasenförmige, vorstehende Abstützfläche 44f derart ausgebildet ist, dass sie auf die Umlauffläche 10 abgestimmt ist und die Ratsche 1 somit ein vordefiniertes Drehmoment überträgt.

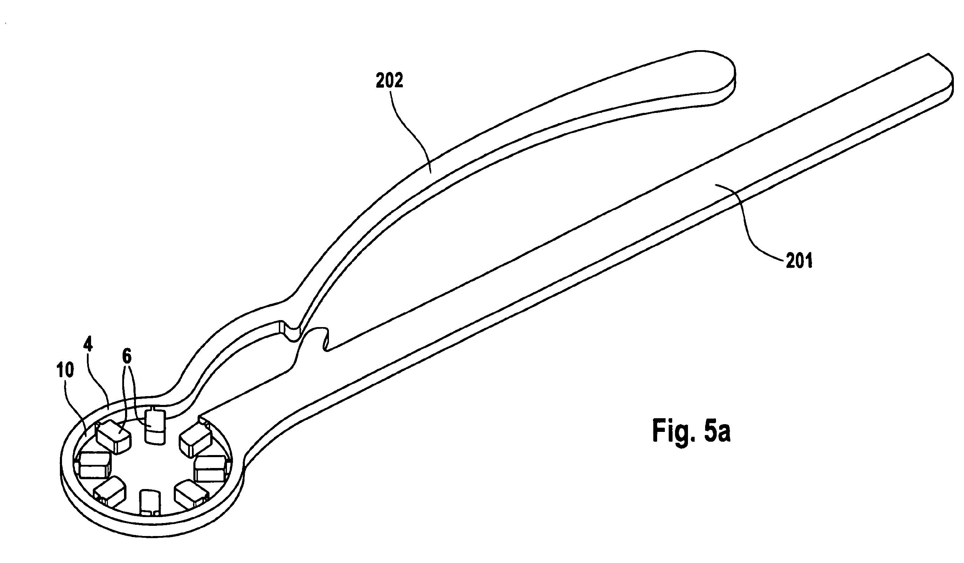

Fig. 5a stellt eine schematisch perspektivische Ansicht einer Ratsche 1 mit zwei Griffstücken 201, 202 einer weiteren Ausführungsform der vorliegenden Erfindung dar. Dabei sind, trotz der Ausbildung der unterbrochenen Kontur des Drehpunktgehäuses 4, alle acht Klemmelemente 6 punktsymmetrisch bezüglich der Drehachse D und periodisch zueinander an der Umlauffläche 10 angeordnet. Das Drehpunktgehäuse 4 ist zum einen mit einer unterbrochenen Kontur und zum anderen senkrecht zur Drehachse D biegsam ausgestaltet, ähnlich eines Nussknackers, so dass dem Benutzer das Aufsetzen der Ratsche 1 auf das Gegenstück 100 erleichtert wird, da durch Spreizen der beiden Griffstücke 201, 2,2 der Nullkreis NK auf vorteilhafte Weise vergrößert wird. Die beiden Griffstücke 201, 2,2 sind flach ausgebildet.

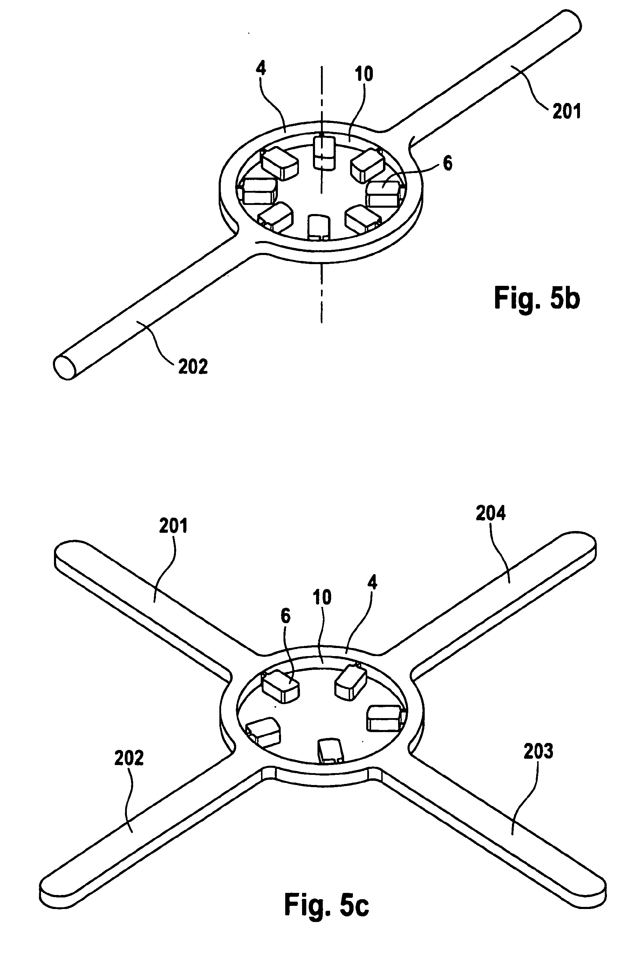

Ferner zeigt Fig. 5b eine weitere Ausführungsform der vorliegenden Erfindung, bei der die Griffstücke 201, 2,2 zueinander gegenüberliegen, d.h. um 180° bezüglich der Drehmittelachse M zueinander verschoben. Beim Eindrehen des Gegenstücks 100 kann somit die Kraft- bzw. Drehmomenteinleitung in die propellerförmige Ratsche 1 wirksam verteilt werden, wobei ein Kippen der Ratsche 1 auf dem Gegenstück 100 entgegengewirkt werden kann. Darüber hinaus kann verhindert werden, dass das Gegenstück 100 schief in die aufnehmende Öffnung montiert wird. Im Vergleich zu Fig.5a sind die Griffstücke 201, 2,2 bei Fig.5b stabförmig ausgebildet, um dem Benutzer eine bessere ergonomische Handhabung zu bieten. Anwendung kann diese weitere Ausführungsform der Ratsche 1 bei Gelenken, im Kieferbereich oder Frakturen jeglicher Art finden.

Eine weitere Ausgestaltung der Griffstücke 2 wird in Fig. 5c gezeigt, bei der vier Griffstücke 201, 202, 203, 204 propellerartig an das Drehpunktgehäuse 4 montiert sind. Exemplarisch sind hier lediglich fünf Klemmelemente 6 an der Umlauffläche 10 angeordnet. Die vier Griffstücke 201, 202, 203, 204 weisen dabei einen periodischen Winkelabstand zueinander auf. Hierdurch wird die Kraft- und Drehmomenteinleitung in die propellerförmig ausgebildete Ratsche 1 noch weiter verbessert.

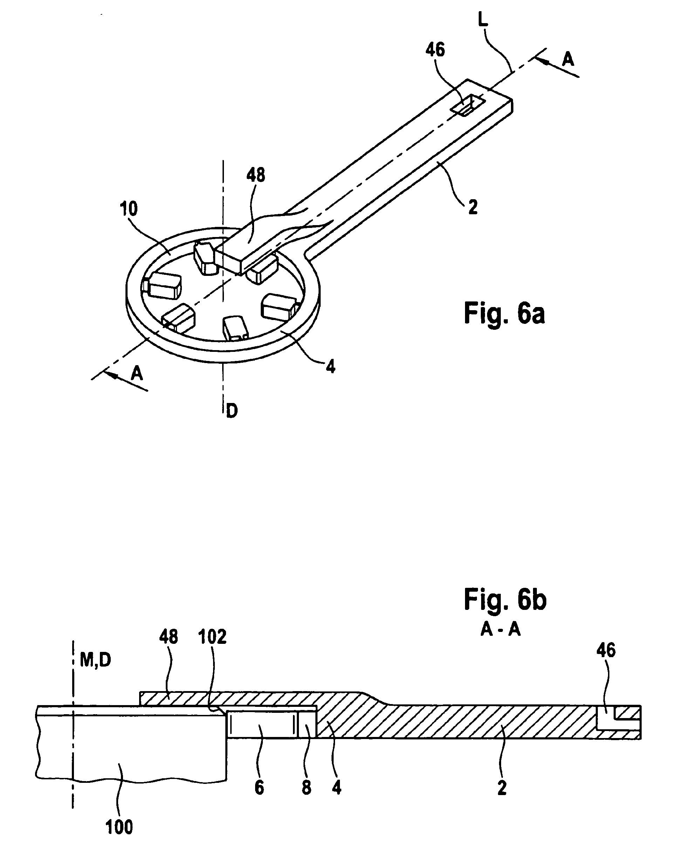

Fig. 6a stellt eine schematisch perspektivische Ansicht einer Ratsche 1 nach einer weiteren Ausführungsform der vorliegenden Erfindung dar. Das Griffstück 2 weist eine Aufnahme 46 auf der dem Drehpunktgehäuse 4 abgewandten Seite auf. Diese Aufnahme 46 kann zum Anbringung einer Verlängerung des Griffstücks 2 dienen, um beispielsweise Stellen zu erreichen, die sonst unzugänglich wären. Darüber hinaus ist ein aus dem Drehpunktgehäuse 4 und/oder dem Griffstück 2 herausragender Anschlag 48 ausgebildet, der wenigstens zum Teil in den Bereich des Nullkeises NK ragt, so dass die Ratsche 1 lediglich bis zu einem im Voraus definierten Bereich auf das Gegenstück 100 aufgebracht werden kann, so dass Verletzungen am Gewebe durch zu "tiefes" Einsetzen wirksam vermieden werden können.

In Fig. 6b ist ein Querschnitt des Schnitts A-A der Fig. 6a gezeigt, bei dem die Ratsche 1 bis zum Anschlag 48 auf das Gegenstück 100 mit einer abgefasten Kante 102 aufgesetzt ist. Darüber hinaus ist am Ende des Griffstücks 2 exemplarisch eine Aufnahme 46 dargestellt.

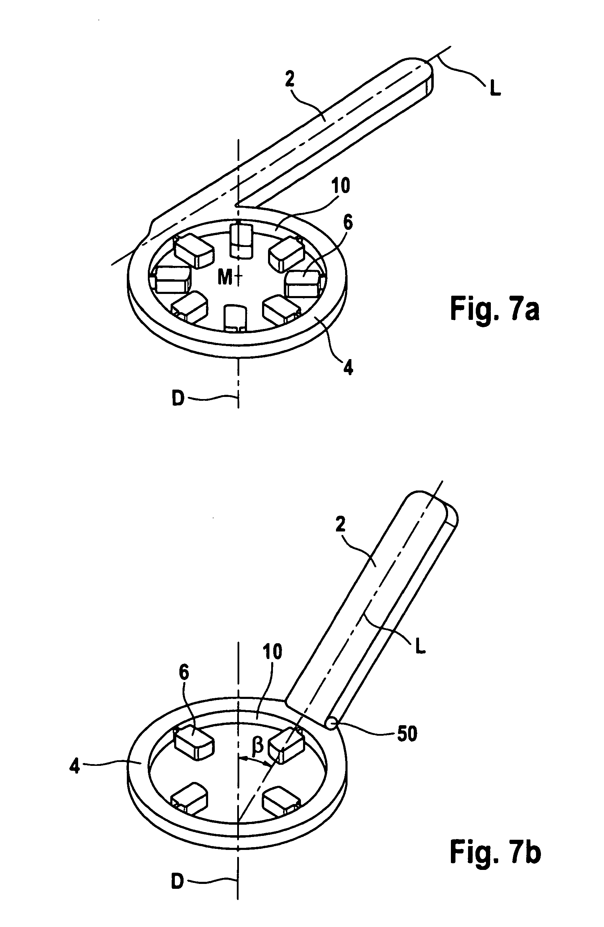

Als weitere Ausführungsform der vorliegenden Erfindung wird in Fig. 7a eine schematisch perspektivische Ansicht der Ratsche 1 gezeigt, bei der die Drehachse D des Drehpunktgehäuses 4 und die Längsachse L des Griffstücks 2 zueinander beabstandet sind. Hierdurch kann an schwer zugänglichen Stellen, insbesondere im Bereich der Backenzähne, gearbeitet werden.

Fig. 7b stellt eine schematisch perspektivische Ansicht einer gekröpften Ratsche 1 nach einer Ausführungsform der vorliegenden Erfindung dar. Die gekröpfte Ratsche 1 weist hierbei eine Drehachse D eines Drehpunktgehäuses 4 und eine Längsachse L des Griffstücks 2 auf, die sich unter ein bestimmtes Winkelmaß β schneiden. Beispielhaft sind bei der vorliegenden gekröpften Ratsche 1 an der Umlauffläche 10 vier Klemmelemente 6 periodisch und punktsymmetrisch bezüglich der Drehachse D angeordnet. Zwischen dem Griffstück 2 und dem Drehpunktgehäuse 4 ist ein Drehgelenk 50 ausgebildet, so dass auf einfache Weise der Winkel β zwischen dem Griffstück 2 und dem Drehpunktgehäuse 4 arretierbar ist.

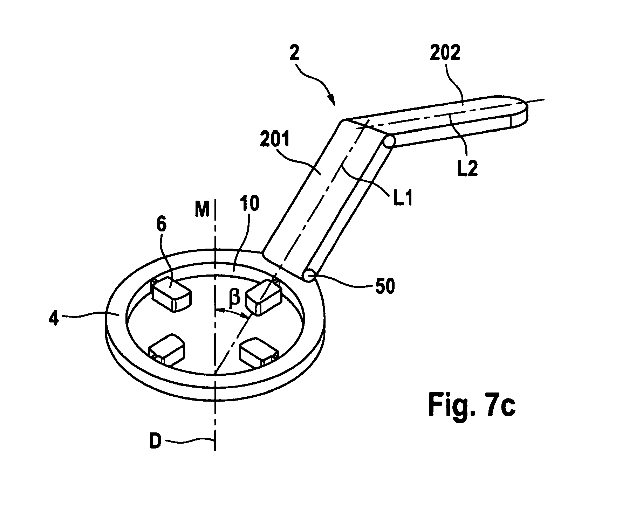

Fig. 7c zeigt eine schematisch vereinfachte, perspektivische Ansicht der gekröpften Ratsche 1 nach einer Ausführungsform der vorliegenden Erfindung. Eine Längsachse L₁ eines ersten dem Drehpunktgehäuse zugewandten Abschnitts eines Griffstücks 201 schneidet sich in dem Winkel β mit der Drehachse D des Drehpunktgehäuses 4. An den ersten Abschnitt 201 eines Griffstücks 2 ist integral ein zweiter Abschnitt 202 ausgebildet, der zu dem ersten Abschnitt 201 einen weiteren beliebigen Winkel aufweist. Demnach sind das Drehpunktgehäuse 4 und das Griffstück 2 in Fig. 7c im Wesentlichen z-förmig ausgebildet.

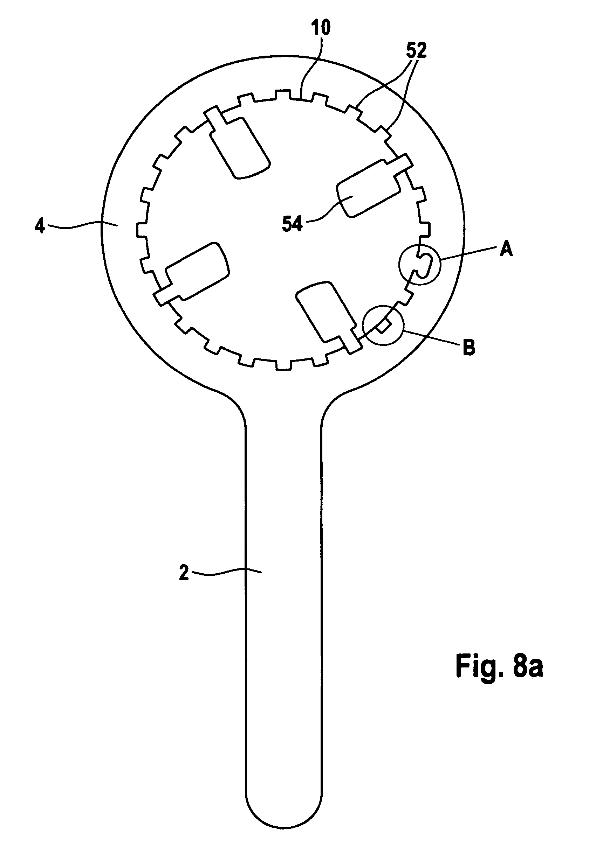

In Fig. 8a ist eine schematische Querschnittsansicht der Ratsche 1 mit Arretiervorrichtung dargestellt. Eine Mehrzahl an Arretieraufnahmen 52 ist an der Umlauffläche 10 des Drehpunktgehäuses 4 ausgebildet. Darin sind vereinzelt Einsatzelemente 54, die aus wenigstens einem stegförmigen Abschnitt 8 und einem Klemmelement 6 ausgebildet werden, arretiert. Je nach Bedarf an Drehmomentübertragung, kann somit eine beliebige Anzahl an Einsatzelementen 54 in den Arretieraufnahmen 52 arretiert werden.

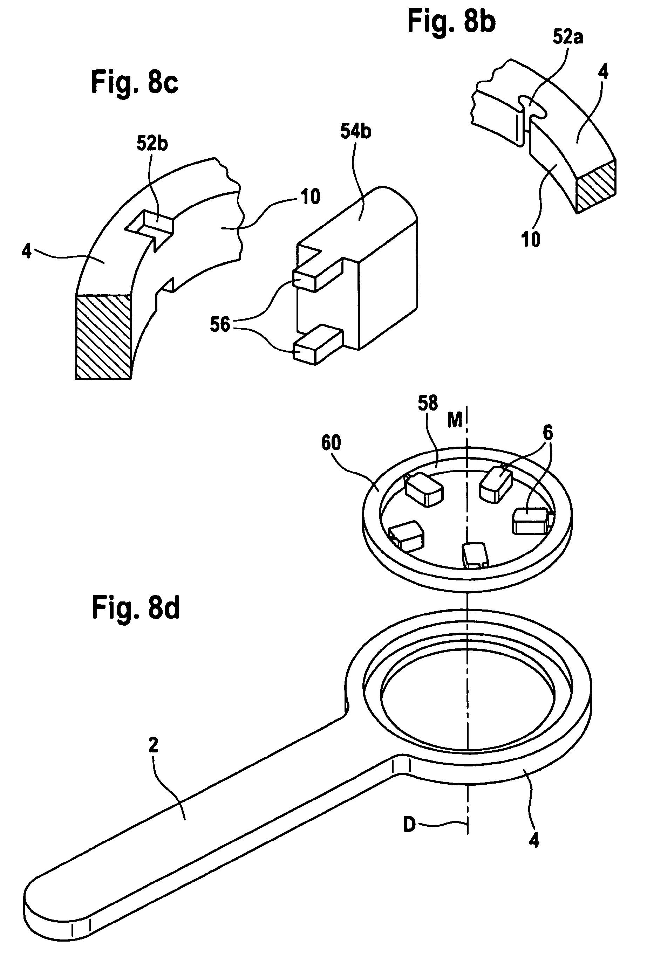

In Fig. 8b ist ferner eine Detailansicht des Ausschnitts A der Fig. 8a für eine erste Arretiermöglichkeit dargestellt. Durch die hinterschneidende Ausbildung der ersten Arretieraufnahme 52a kann auf vorteilhafte Weise das Einsatzelement 54 arretiert werden, so dass es wirksam mit dem Drehpunktgehäuse 4 verbunden ist. Durch die Wärmeausdehnung von Metallen, hier insbesondere das Einsatzelement 54, kann das zu arretierende Einsatzelement 54 in die Arretieraufnahme 52a verbunden werden.

Eine zweite denkbare Möglichkeit einer Arretiervorrichtung zeigt Fig. 8c, die eine Detailansicht des Ausschnitts B der Fig. 8a darstellt. An dem Drehpunktgehäuse 4 sind an beiden Seiten des Drehpunktgehäuses 4 an der Umlauffläche 10 zugewandten Seite Vertiefungen als Arretieraufnahme 52a eingelassen. Entsprechend sind an einem Einsatzelement 54b zwei beabstandete Zapfen 56 ausgebildet. Durch die federartige Vorspannung der beiden Zapfen 56, kann das Einsatzelement 54b in der Arretieraufnahme 52a besonders gut arretiert werden.

In Fig. 8d ist eine schematisch perspektivische Ansicht einer dritten Arretiermöglichkeit dargestellt. Hierbei sind exemplarisch fünf Klemmelemente 6 mit den dazugehörigen stegförmigen Abschnitten periodisch an einer Umlauffläche 58 eines Einsatzrings 60 angeordnet. Dieser Einsatzring 60 ist in dem alternativen Drehpunktgehäuse 4, beispielsweise durch Wärmeausdehnung des Einsatzrings 60, derart arretierbar, dass die Drehachseachse D1 mit einer Mittelachse M des Einsatzrings 60 zusammenfallen. Durch Einsetzen verschiedener Einsatzringe 60 die eine unterschiedliche Anzahl und/oder Ausbildung von Klemmelementen 6 aufweisen, kann

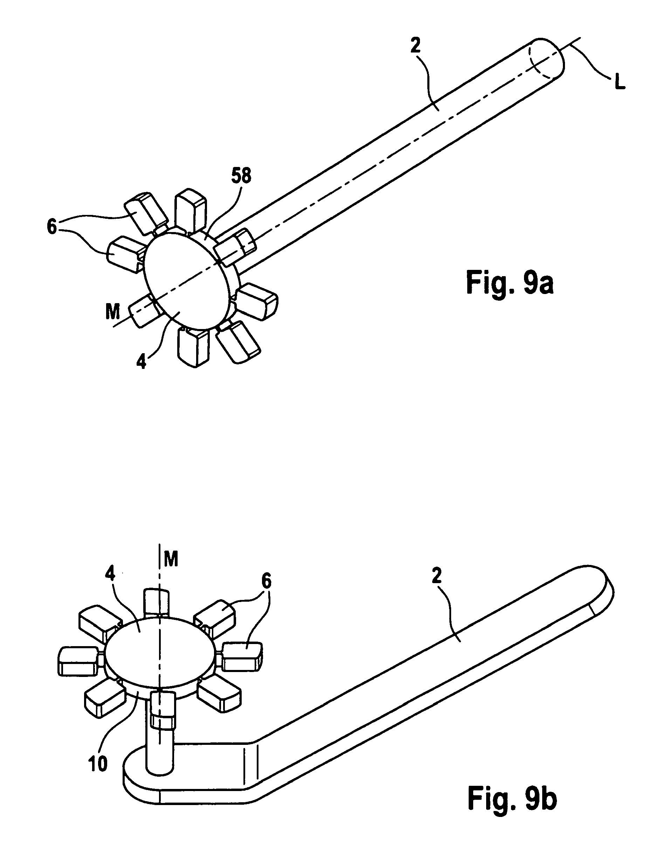

In Fig. 9a ist eine schematisch perspektivische Ansicht der einstückigen Ratsche 1 nach einer weiteren Ausführungsform der vorliegenden Erfindung dargestellt. Die Klemmelemente 6 sind mit ihren stegförmigen Abschnitten 8 an einer äußeren Umlauffläche 58 des Drehpunktgehäuses 4 angeordnet. Hierbei fallen die Drehachse D des Drehpunktgehäuses 4 und die Längsachse L des Griffstücks 2 zusammen, mithin koaxial. So kann besonders gut das Drehmoment auf ein hohles, zylindrisch ausgebildetes Gegenstück beaufschlagt werden. Das Drehmomentgehäuse 4 ist im Vergleich zu den vorstehenden Ausführungsformen kein ringartiges bzw. unterbrochenes ringartiges Drehpunktgehäuse 4, sondern vielmehr eine Scheibe, bei der die Stirnseite die Umlauffläche 62 bildet. Ferner zeigt Fig. 9b eine schematisch perspektivische Ansicht der Ratsche 1, ähnlich wie in Fig. 9a, wobei hier das abgewinkelt ausgebildete Griffstück 2 den Zugang zu schwer zugänglichen Stellen erleichtert.

Das Gegenstück 100 kann in einem ersten Abschnitt zylindrisch ausgebildet sein und in einem zweiten Abschnitt ein Gewinde aufweisen, so dass es in eine aufzunehmende Öffnung, im Kieferbereich, in einem Knochen oder dergleichen eingedreht werden kann. Alternativ kann das Gegenstück 100 auch zylindrisch hohl ausgebildet sein.

Als alternative Ausführungsform kann lediglich das Drehpunktgehäuse mit einer Aufnahme gestaltet werden, so dass es in ein Bohrfutter einer Bohrmaschine passt. Die Aufnahme ist auf der das Gegenstück aufnehmenden gegenüberliegenden Seite angeordnet. Mithin kann besonders gut ein gewünschtes Drehmoment auf das Gegenstück beaufschlagt werden. Ist das im Voraus durch die Anordnung, Ausbildung und Anzahl der Klemmelemente festgelegte Drehmoment übertragen, biegen sich die stegförmigen Abschnitte durch. Demnach wird ein Freilauf erzeugt und eine Drehmomentbegrenzung wird sichergestellt. Durch Variation des Nullkreises NK, Klemmkreises KK und Aufnahmekreises AK sowie des maximal zu übertragenden Drehmoments kann ferner ein modulares Baukastensystem erzeugt werden.

Obgleich die Ratsche 1 vorstehend für den Medizinbereich, insbesondere für Dentalbereich, diskutiert wird, kann die Ratsche 1 auch in Bereichen, wo ein hoher Anspruch an Reinheit besteht, wie z.B. bei der Raumfahrt, bei der Halbleiterfertigung, etc., oder dergleichen.

Es wird eine Ratsche 1 vorgeschlagen, die ein Griffstück 2 mit einer Längsachse und ein an einem Abschnitt des Griffstücks 2 angeordnetes Drehpunktgehäuse 4 aufweist. Das Drehpunktgehäuse 4 weist ferner eine relativ zur Längsachse des Griffstücks 2 ausgerichtete Drehachse und eine Umlauffläche 10 auf. Darüber hinaus weist die Ratsche 1 wenigstens ein Klemmelement 6 auf, das eine erste, eine Klemmfläche 6a bildende, Stirnfläche 6a, und eine zweite, der ersten Stirnfläche 6a gegenüberliegende, Stirnfläche 6b aufweist, und wenigstens einen stegförmigen Abschnitt 8 mit einem der Umlauffläche 10 zugewandten Ende 8a und einem zweiten Ende 8b hat. Dabei ist der stegförmige Abschnitt 8 derart zwischen der Umlauffläche 10 und dem Klemmelement 6 angeordnet, dass das der Umlauffläche 10 zugewandte Ende 8a des stegförmigen Abschnitts 8 mit der Umlauffläche 10 des Drehpunktgehäuses 4 verbunden ist, und dass das dem Klemmelement 6 zugewandte Ende 8b des stegförmigen Abschnitts 8 mit der zweiten Stirnfläche 6b des Klemmelements 6 verbunden ist.

## Patentansprüche

1. Ratsche (1), aufweisend:
• ein Griffstück (2) mit einer Längsachse (L), und
• ein an einem Abschnitt des Griffstücks (2) angeordnetes Drehpunktgehäuse (4),
wobei das Drehpunktgehäuse (4) eine relativ zur Längsachse (L) des Griffstücks (2) ausgerichtete Drehachse (D) und eine Umlauffläche (10) aufweist,
**dadurch gekennzeichnet, dass** die Ratsche (1) ferner aufweist:
• wenigstens ein polygonförmig ausgebildetes Klemmelement (6), wobei das Klemmelement (6) eine erste, eine Klemmfläche bildende, Stirnfläche (6a), und eine zweite, der ersten Stirnfläche (6a) gegenüberliegende, Stirnfläche (6b) aufweist, und
• wenigstens einen stegförmigen Abschnitt (8) mit einem der Umlauffläche (10) zugewandten Ende (8a) und einem dem Klemmelement (6) zugewandten Ende (8b),
wobei der stegförmige Abschnitt (8) derart zwischen der Umlauffläche (10) und dem Klemmelement (6) angeordnet ist, dass das der Umlauffläche (10) zugewandte Ende (8a) des stegförmigen Abschnitts (8) mit der Umlauffläche (10) des Drehpunktgehäuses (4) verbunden ist, und dass das dem Klemmelement (6) zugewandte Ende (8b) des stegförmigen Abschnitts (8) mit der zweiten Stirnfläche (6b) des Klemmelements (6) verbunden ist.

2. Ratsche (1) nach Anspruch 1, **dadurch gekennzeichnet, dass** der stegförmige Abschnitt (8) biegsam ausgebildet ist, wobei der stegförmige Abschnitt (8) vorzugsweise in die zweite Stirnfläche (8b) oder Seitenflächen (8c, 8d) des Klemmelements (6) übergeht und/oder das dem Klemmelement (6) zugewandte Ende (8b) des stegförmigen Abschnitts (8) vorzugsweise seitlich beabstandet von einer gedachten Mittellinie des Klemmelements (6) mit der zweiten Stirnfläche (8b) verbunden ist.

3. Ratsche (1) nach Anspruch 1 oder 2, **dadurch gekennzeichnet, dass** die Klemmfläche (6a) durch eine Kurve beschrieben wird, vorzugsweise durch einen Radius, wobei die Klemmfläche (6a) vorzugsweise einen maximalen Entfernungspunkt (6e) aufweist, der in Bezug auf die gedachte Mittellinie des Klemmelements (6) diametral der Seite gegenüberliegt, an der die zweite Stirnfläche (6b) mit dem dem Klemmelement (6) zugewandten Ende (8b) des stegförmigen Abschnitts (8) verbunden ist.

4. Ratsche (1) nach einem der Ansprüche 1 bis 3, **dadurch gekennzeichnet, dass** die Ratsche (1) eine Mehrzahl von, vorzugsweise wenigstens zum Teil gehärtet ausgebildeten, Klemmelementen (6) aufweist, wobei die Klemmelemente (6) vorzugsweise symmetrisch zueinander angeordnet sind und/oder einen periodischen Abstand entlang der Umlauffläche (10) aufweisen.

5. Ratsche (1) nach einem der Ansprüche 1 bis 4, **dadurch gekennzeichnet, dass** die Ratsche (1) einstückig ausgebildet ist.

6. Ratsche (1) nach einem der Ansprüche 1 bis 5, **dadurch gekennzeichnet, dass** der stegförmige Abschnitt (8), in Richtung der Drehachse (D) betrachtet, in einem Winkel relativ zur Umlauffläche (10) und/oder zur zweiten Stirnfläche (6b) angeordnet ist.

7. Ratsche (1) nach einem der Ansprüche 1 bis 6, **dadurch gekennzeichnet, dass** wenigstens zwei stegförmige Abschnitte (8) ein Klemmelement (6) mit der Umlauffläche (10) verbinden.

8. Ratsche (1) nach einem der Ansprüche 1 bis 7, **dadurch gekennzeichnet, dass** das Drehpunktgehäuse (4) eine unterbrochene Kontur aufweist.

9. Ratsche (1) nach einem der Ansprüche 1 bis 8, **dadurch gekennzeichnet, dass** das Drehpunktgehäuse (4) senkrecht zur Drehachse (D) biegsam ausgebildet ist.

10. Ratsche (1) nach einem der Ansprüche 1 bis 9, **dadurch gekennzeichnet, dass** die Ratsche (1) wenigstens ein zweites Griffstück (202) aufweist.

11. Ratsche (1) nach einem der Ansprüche 1 bis 10, **dadurch gekennzeichnet, dass** das Griffstück (2), das Drehpunktgehäuse (4), der stegförmige Abschnitt (8) und das Klemmelement (6) die selbe Dicke aufweisen, wobei vorzugsweise im Bereich des Griffstücks (2) und/oder des Drehpunktgehäuses (4) eine Markierung (18) vorgesehen ist.

12. Ratsche (1) nach einem der Ansprüche 1 bis 11, **dadurch gekennzeichnet, dass** das Griffstück (2) im Querschnitt zylindrisch ausgebildet ist.

13. Ratsche (1) nach einem der Ansprüche 1 bis 12, **dadurch gekennzeichnet, dass** an dem Griffstück (2) eine Aufnahme (46) ausgebildet ist.

14. Ratsche (1) nach einem der Ansprüche 1 bis 13, **dadurch gekennzeichnet, dass** die Ratsche (1) einen Anschlag (48) aufweist.

15. Ratsche (1) nach einem der Ansprüche 1 bis 14, **dadurch gekennzeichnet, dass** die Drehachse (D) des Drehgehäuses (4) und die Längsachse (L) des Griffstücks (2) voneinander beabstandet sind.

16. Ratsche (1) nach einem der Ansprüche 1 bis 14, **dadurch gekennzeichnet, dass** sich die Drehachse (D) des Drehgehäuses (4) und die Längsachse (L) des Griffstücks (2) vorzugsweise in einem Winkel von 30 ° bis 150 °, besonders bevorzugt von 60 ° bis 120 ° und insbesondere in einem Winkel von 90 °, relativ zur Längsachse (L), schneiden.

17. Ratsche (1) nach einem der Ansprüche 1 bis 16, **dadurch gekennzeichnet, dass** die Ratsche (1) aus Edelstahl, Titan, Keramik, verschleißfesten Kunststoffen oder dergleichen ausgebildet ist, oder dass die Ratsche (1) aus einer Gedächtnislegierung, insbesondere Formgedächtnislegierung, ausgebildet ist.

18. Ratsche (1) nach einem der Ansprüche 1 bis 4 und 6 bis 17, **dadurch gekennzeichnet, dass** die Umlauffläche (10) wenigstens eine Arretiervorrichtung aufweist;
wobei das Klemmelement (6) integral mit dem stegförmigen Abschnitt (8) ausgebildet ist und ein separat von der Ratsche (1) vorgesehenes Einsatzelement (54) bildet; und
wobei wenigstens ein derart ausgebildetes Einsatzelement (54) in der wenigstens einen Arretiervorrichtung arretierbar ist.

19. Verwendung einer Ratsche (1) nach einem der Ansprüche 1 bis 18 im Medizinbereich, insbesondere im Dentalbereich, zum Übertragen eines Drehmoments auf ein Gegenstück (100), wobei das Gegenstück (100) im Wesentlichen zylindrisch ausgebildet ist.

20. Verfahren zum Übertragen eines aufzubringenden Drehmoments auf ein, vorzugsweise zylindrisch ausgebildetes, Gegenstück (100) vermittels einer Ratsche (1) nach einem der Ansprüche 1 bis 18, mit den Schritten:
- Aufbringen der Ratsche (1) auf das Gegenstück (100) in axiale Richtung durch Aufsetzen der Ratsche (1) auf das Gegenstück (100) und Drehen der Ratsche (1) in eine Freilaufrichtung bei gleichzeitigem Absenken der Ratsche (1) entlang des Gegenstücks (2);
- Fixieren der Ratsche (1) auf dem Gegenstück (100) und Übertragen des Drehmoments auf das Gegenstück (100) durch Drehen der Ratsche (1) in eine Drehmomentübertragungsrichtung, wobei das Gegenstück (100) gegen die Klemmflächen (6a) der Klemmelemente (6) drückt und die Ratsche (1) das Gegenstück (100) in die Drehmomentübertragungsrichtung mitnimmt, wodurch das Drehmoment von der Ratsche (1) auf das Gegenstück (100) übertragen wird;
- Freigeben des Gegenstücks (100) durch Drehen der darauf befindlichen Ratsche (1) gegen die Drehmomentübertragungsrichtung;
- Lösen der Ratsche (1) vom Gegenstück (100) durch Drehen in die Freilaufrichtung mit gleichzeitigem Abnehmen der Ratsche (1) vom Gegenstück (100) in axiale Richtung.

21. Verfahren nach Anspruch 20, wobei die Schritte
- Fixieren der Ratsche (1) auf dem Gegenstück (100) und Übertragen des Drehmoments auf das Gegenstück (100) durch Drehen der Ratsche (1) in eine Drehmomentübertragungsrichtung, sowie
- Freigeben des Gegenstücks (100) durch Drehen der darauf befindlichen Ratsche (1) gegen die Drehmomentübertragungsrichtung
wiederholt ausgeführt werden, bevor die Ratsche (1) vom Gegenstück (100) gelöst wird.

## Claims

1. Ratchet (1), having:
• a grip piece (2) with a longitudinal axis (L), and
• a pivot housing (4) arranged on a section of the grip piece (2),
wherein the pivot housing (4) has a pivot axis (D) oriented relative to the longitudinal axis (L) of the grip piece (2) and a peripheral face (10),
**characterised in that** the ratchet (1) further has:
• at least one polygonally designed clamping element (6),
wherein the clamping element (6) has a first end face (6a) that forms a clamping surface, and a second end face (6b) opposite to the first end face (6a), and
• at least one web-shaped section (8) with an end (8a) facing the peripheral face (10) and an end (8b) facing the clamping element (6),
wherein the web-shaped section (8) is arranged between the peripheral face (10) and the clamping element (6) such that the end (8a) of the web-shaped section (8) facing the peripheral face (10) is connected to the peripheral face (10) of the pivot housing (4), and that the end (8b) of the web-shaped section (8) facing the clamping element (6) is connected to the second end face (6b) of the clamping element (6).

2. Ratchet (1) according to claim 1, **characterised in that** the web-shaped section (8) is flexible, wherein the web-shaped section (8) preferably merges into the second end face (8b) or side faces (8c, 8d) of the clamping element (6) and/or the end (8b) of the web-shaped section (8) facing the clamping element (6) is connected to the second end face (8b) preferably at a lateral distance from an imaginary centre line of the clamping element (6).

3. Ratchet(1) according to claim 1 or 2, **characterised in that** the clamping surface (6a) is described by a curve, preferably by a radius, wherein the clamping surface (6a) preferably has a maximum distant point (6e) that in relation to the imaginary centre line of the clamping element (6) lies diametrically opposite the side, on which the second end face (6b) is connected to the end (8b) of the web-shaped section (8) facing the clamping element (6).

4. Ratchet (1) according to one of claims 1 to 3, **characterised in that** the ratchet (1) has a plurality of clamping elements (6), of which at least some being preferably hardened, wherein the clamping elements (6) are symmetrically arranged to one another and/or are periodically spaced along the peripheral face (10).

5. Ratchet (1) according to one of claims 1 to 4, **characterised in that** the ratchet (1) is designed in one piece.

6. Ratchet (1) according to one of claims 1 to 5, **characterised in that** the web-shaped section (8) as seen in the direction of the rotational axis (D) is arranged at an angle relative to the peripheral face (10) and/or to the second end face (6b).

7. Ratchet (1) according to one of claims 1 to 6, **characterised in that** at least two web-shaped sections (8) connect a clamping element (6) to the peripheral face (10).

8. Ratchet (1) according to one of claims 1 to 7, **characterised in that** the pivot housing (4) has an unbroken contour.

9. Ratchet (1) according to one of claims 1 to 8, **characterised in that** the pivot housing (4) is flexibly formed perpendicular to the rotational axis (D).

10. Ratchet (1) according to one of claims 1 to 9, **characterised in that** the ratchet (1) has at least one second gripping piece (202).

11. Ratchet (1) according to one of claims 1 to 10, **characterised in that** the gripping piece (2), the pivot housing (4), the web-shaped section (8) and the clamping element (6) have the same thickness, wherein a mark (18) is provided preferably in the area of the gripping piece (2) and/or of the pivot housing (4).

12. Ratchet (1) according to one of claims 1 to 11, **characterised in that** the cross section of gripping piece (2) is cylindrical.

13. Ratchet (1) according to one of claims 1 to 12, **characterised in that** a recess (46) is formed in the gripping piece (2).

14. Ratchet (1) according to one of claims 1 to 13, **characterised in that** the ratchet (1) has an arrestor (48).

15. Ratchet (1) according to one of claims 1 to 14, **characterised in that** the rotational axis (D) of the pivot housing (4) and the longitudinal axis (L) of the gripping piece (2) are spaced apart from one another.

16. Ratchet (1) according to one of claims 1 to 14, **characterised in that** the rotational axis (D) of the pivot housing (4) and the longitudinal axis (L) of the gripping piece (2) preferably intersect at an angle of 30° to 150°, particularly preferably 60° to 120° and especially at an angle of 90°, relative to the longitudinal axis (L).

17. Ratchet (1) according to one of claims 1 to 16, **characterised in that** the ratchet (1) is made of stainless steel, titanium, ceramics, wear resistant plastics or the like, or that the ratchet (1) is made of a memory alloy, in particular a shape memory alloy.

18. Ratchet (1) according to one of claims 1 to 4 and 6 to 17, **characterised in that** the peripheral face (10) has at least one locking device;
wherein the clamping element (6) is integrally formed with the web-shaped section (8) and forms a separately designed insert element (54) of the ratchet (1); and
wherein at least one insert element (54) of this type is lockable in the at least one locking device.

19. Use of a ratchet (1) according to one of claims 1 to 18 in the medical field, in particular in the dental field, for transferring a torsional moment to a counterpart (100), wherein the shape of the counterpart (100) is essentially cylindrical.

20. Method for transferring a torsional moment to be applied to a preferably cylindrical counterpart (100) by means of a ratchet (1) according to one of claims 1 to 18, with the steps:
- applying the ratchet (1) onto the counterpart (100) in the axial direction by superimposing the ratchet onto the counterpart (100) and turning the ratchet (1) in an unimpeded direction while simultaneously lowering the ratchet (1) along the counterpart (2);
- fixing the ratchet (1) to the counterpart (100) and transferring the torsional moment onto the counterpart (100) by turning the ratchet (1) in a torsional moment transfer direction, wherein the counterpart (100) presses against the clamping surfaces (6a) of the clamping element (6) and the ratchet (1) entrains the counterpart (100) in the torsional moment transfer direction, whereby the torsional moment is transferred from the ratchet (1) onto the counterpart (100);
- unclamping the counterpart (100) by turning the ratchet (1) located on it against the torsional moment transfer direction;
- releasing the ratchet (1) from the counterpart (100) by turning in the unimpeded direction while simultaneously detaching the ratchet (1) from the counterpart (100) in the axial direction.

21. Method according to claim 20, wherein the steps
- fixing the ratchet (1) to the counterpart (100) and transferring the torsional moment onto the counterpart (100) by turning the ratchet (1) in a torsional moment transfer direction,
and
- unclamping the counterpart (100) by turning the ratchet (1) located on it against the torsional moment transfer direction
are performed repeatedly before the ratchet (1) is detached from the counterpart (100).

## Revendications

1. Clé à cliquet (1), présentant :
- une poignée (2) pourvue d'un axe longitudinal (L), et
- un boîtier à centre de rotation (4) disposé au niveau d'une section de la poignée (2),
sachant que le boîtier à centre de rotation (4) présente un axe de rotation (D) orienté par rapport à l'axe longitudinal (L) de la poignée (2) et une surface périphérique (10),
**caractérisée en ce que** la clé à cliquet (1) présente en outre :
- au moins un élément de serrage (6) réalisé de manière à présenter une forme polygonale,
sachant que l'élément de serrage (6) présente une première surface frontale (6a) formant une surface de serrage et une deuxième surface frontale (6b) faisant face à la première surface frontale (6a), et
- au moins une section (8) présentant une forme d'entretoise pourvue d'une extrémité (8a) tournée vers la surface périphérique (10) et d'une extrémité (8b) tournée vers l'élément de serrage (6),
sachant que la section (8) présentant une forme d'entretoise est disposée entre la surface périphérique (10) et l'élément de serrage (6) de telle manière que l'extrémité (8a), tournée vers la surface périphérique (10), de la section (8) présentant une forme d'entretoise est reliée à la surface périphérique (10) du boîtier à centre de rotation (4), et sachant que l'extrémité (8b), tournée vers l'élément de serrage (6), de la section (8) présentant une forme d'entretoise est reliée à la deuxième surface frontale (6b) de l'élément de serrage (6).

2. Clé à cliquet (1) selon la revendication 1, **caractérisée en ce que** la section (8) présentant une forme d'entretoise est réalisée de manière flexible, sachant que la section (8) présentant une forme d'entretoise se confond de préférence avec la deuxième surface frontale (8b) ou avec les surfaces latérales (8c, 8d) de l'élément de serrage (6), et/ou **en ce que** l'extrémité (8b), tournée vers l'élément de serrage (6), de la section (8) présentant une forme d'entretoise est reliée à la deuxième surface frontale (8b) de préférence en étant tenue à distance latéralement d'une ligne médiane imaginaire de l'élément de serrage (6).

3. Clé à cliquet (1) selon la revendication 1 ou 2, **caractérisée en ce que** la surface de serrage (6a) est décrite par une courbe, de préférence par un rayon, sachant que la surface de serrage (6a) présente de préférence un point d'éloignement (6e) maximal, qui est diamétralement opposé, par rapport à la ligne médiane imaginaire de l'élément de serrage (6), au côté, au niveau duquel la deuxième surface frontale (6b) est reliée à l'extrémité (8b), tournée vers l'élément de serrage (6), de la section (8) présentant une forme d'entretoise.

4. Clé à cliquet (1) selon l'une quelconque des revendications 1 à 3, **caractérisée en ce que** la clé à cliquet (1) présente une multitude d'éléments de serrage (6), réalisés de préférence au moins en partie durcis, sachant que les éléments de serrage (6) sont disposés de préférence de manière symétrique les uns par rapport aux autres et/ou présentent un espacement périodique le long de la surface périphérique (10).

5. Clé à cliquet (1) selon l'une quelconque des revendications 1 à 4, **caractérisée en ce que** la clé à cliquet (1) est réalisée d'un seul tenant.

6. Clé à cliquet (1) selon l'une quelconque des revendications 1 à 5, **caractérisée en ce que** la section (8) présentant une forme d'entretoise, vue dans la direction de l'axe de rotation (D), est disposée selon un angle par rapport à la surface périphérique (10) et/ou par rapport à la deuxième surface frontale (6b).

7. Clé à cliquet (1) selon l'une quelconque des revendications 1 à 6, **caractérisée en ce qu'**au moins deux sections (8) présentant une forme d'entretoise relient un élément de serrage (6) à la surface périphérique (10).

8. Clé à cliquet (1) selon l'une quelconque des revendications 1 à 7, **caractérisée en ce que** le boîtier à centre de rotation (4) présente un contour discontinu.

9. Clé à cliquet (1) selon l'une quelconque des revendications 1 à 8, **caractérisée en ce que** le boîtier à centre de rotation (4) est réalisé de manière flexible de manière perpendiculaire par rapport à l'axe de rotation (D).

10. Clé à cliquet (1) selon l'une quelconque des revendications 1 à 9, **caractérisée en ce que** la clé à cliquet (1) présente au moins une deuxième poignée (202).

11. Clé à cliquet (1) selon l'une quelconque des revendications 1 à 10, **caractérisée en ce que** la poignée (2), le boîtier à centre de rotation (4), la section (8) présentant une forme d'entretoise et l'élément de serrage (6) présentent la même épaisseur, sachant que de préférence un marquage (18) est prévu de préférence dans la zone de la poignée (2) et/ou du boîtier à centre de rotation (4).

12. Clé à cliquet (1) selon l'une quelconque des revendications 1 à 11, **caractérisée en ce que** la poignée (2) est réalisée dans la section transversale de manière cylindrique.

13. Clé à cliquet (1) selon l'une quelconque des revendications 1 à 12, **caractérisée en ce qu'**un logement (46) est réalisé au niveau de la poignée (2).

14. Clé à cliquet (1) selon l'une quelconque des revendications 1 à 13, **caractérisée en ce que** la clé à cliquet (1) présente une butée (48).

15. Clé à cliquet (1) selon l'une quelconque des revendications 1 à 14, **caractérisée en ce que** l'axe de rotation (D) du boîtier à centre de rotation (4) et l'axe longitudinal (L) de la poignée (2) sont tenus à distance l'un de l'autre.

16. Clé à cliquet (1) selon l'une quelconque des revendications 1 à 14, réalisée en ce que l'axe de rotation (D) du boîtier à centre de rotation (4) et l'axe longitudinal (L) de la poignée (2) se coupent de préférence selon un angle allant de 30° à 150°, de manière particulièrement préférée allant de 60° à 120° et en particulier selon un angle de 90°, par rapport à l'axe longitudinal (L).

17. Clé à cliquet (1) selon l'une quelconque des revendications 1 à 16, **caractérisée en ce que** la clé à cliquet (1) est réalisée en acier inoxydable, en titane, en céramique, en matières plastiques résistantes à l'usure ou similaires, ou **en ce que** la clé à cliquet (1) est réalisée à partir d'un alliage à mémoire, en particulier d'un alliage à mémoire de forme.

18. Clé à cliquet (1) selon l'une quelconque des revendications 1 à 4 et 6 à 17, **caractérisée en ce que** la surface périphérique (10) présente au moins un dispositif de blocage,
sachant que l'élément de serrage (6) est réalisé de manière intégrale avec la section (8) présentant une forme d'entretoise et forme un élément rapporté (54) prévu de manière séparée de la clé à cliquet (1), et
sachant qu'au moins un élément rapporté (54) réalisé de cette manière peut être bloqué dans le dispositif de blocage au moins au nombre de un.

19. Utilisation d'une clé à cliquet (1) selon l'une quelconque des revendications 1 à 18 dans le domaine médical, en particulier dans le domaine dentaire, servant à transférer un couple de rotation sur une pièce complémentaire (100), sachant que la pièce complémentaire (100) est réalisée essentiellement de manière cylindrique.

20. Procédé servant à transférer un couple de rotation à appliquer sur une pièce complémentaire (100), réalisée de préférence de manière cylindrique, par l'entremise d'une clé à cliquet (1) selon l'une quelconque des revendications 1 à 18, comprenant les étapes suivantes consistant à :
- appliquer la clé à cliquet (1) sur la pièce complémentaire (100) dans un sens axial en plaçant la clé à cliquet (1) sur la pièce complémentaire (100) et faire tourner la clé à cliquet (1) dans un sens libre tout en abaissant dans le même temps la clé à cliquet (1) le long de la pièce complémentaire (2) ;
- fixer la clé à cliquet (1) sur la pièce complémentaire (100) et transférer le couple de rotation sur la pièce complémentaire (100) en faisant tourner la clé à cliquet (1) dans un sens de transfert de couple de rotation, sachant que la pièce complémentaire (100) exerce une pression contre les surfaces de serrage (6a) des éléments de serrage (6) et que la clé à cliquet (1) entraîne la pièce complémentaire (100) dans le sens de transfert de couple de rotation, ce qui permet de transférer le couple de rotation de la clé à cliquet (1) sur la pièce complémentaire (100) ;
- débloquer la pièce complémentaire (100) en faisant tourner la clé à cliquet (1) se trouvant dessus à l'encontre du sens de transfert de couple de rotation ;
- desserrer la clé à cliquet (1) de la pièce complémentaire (100) en faisant tourner dans le sens libre tout en retirant dans le même temps la clé à cliquet (1) de la pièce complémentaire (100) dans le sens axial.

21. Procédé selon la revendication 20, sachant que les étapes consistant à
- fixer la clé à cliquet (1) sur la pièce complémentaire (100) et transférer le couple de rotation sur la pièce complémentaire (100) en faisant tourner la clé à cliquet (1) dans un sens de transfert de couple de rotation,
ainsi que
- débloquer la pièce complémentaire (100) en faisant tourner la clé à cliquet (1) se trouvant dessus à l'encontre du sens de transfert de couple de rotation
sont exécutées de manière répétée avant que la clé à cliquet (1) ne soit desserrée de la pièce complémentaire (100).
